(19) **Europäisches Patentamt / European Patent Office / Office européen des brevets**

(11) **EP 4 768 612 A1**

(12) **EUROPEAN PATENT APPLICATION**
published in accordance with Art. 153(4) EPC

(43) Date of publication:
01.07.2026 Bulletin 2026/27

(21) Application number: 25867253.4

(22) Date of filing: 26.09.2025

(51) International Patent Classification (IPC):
$C22B\ 26/12^{(2006.01)}$  $C22B\ 3/42^{(2006.01)}$
$C22B\ 1/00^{(2006.01)}$  $C22B\ 5/12^{(2006.01)}$
$C22B\ 3/06^{(2006.01)}$  $C22B\ 3/22^{(2006.01)}$
$H01M\ 10/54^{(2006.01)}$  $B01D\ 61/44^{(2006.01)}$

(52) Cooperative Patent Classification (CPC):
B01D 61/44; C22B 1/00; C22B 3/06; C22B 3/22;
C22B 3/42; C22B 5/12; C22B 26/12; H01M 10/54;
Y02W 30/84

(86) International application number:
PCT/KR2025/015171

(87) International publication number:
WO 2026/071770 (02.04.2026 Gazette 2026/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 27.09.2024 KR 20240131492
25.09.2025 KR 20250138761

(71) Applicants:
• **LG ENERGY SOLUTION, LTD.**
**Seoul 07335 (KR)**
• **Toray Advanced Materials Korea Inc.**
**Gumi-si, Gyeongsangbuk-do 39389 (KR)**

(72) Inventors:
• **YU, Hyemin**
**KR)**

• **LEE, Jeongbae**
**KR)**
• **KIM, Donghyeon**
**KR)**
• **LEE, Dongseok**
**KR)**
• **JUNG, Yongdoo**
**KR)**
• **CHO, Sunggeun**
**KR)**
• **BYUN, Gwangsu**
**KR)**

(74) Representative: **Hoffmann Eitle
Patent- und Rechtsanwälte PartmbB
Arabellastraße 30
81925 München (DE)**

(54) **LITHIUM RECOVERY METHOD**

(57) The present invention relates to a method of recovering lithium. More particularly, the present invention relates to a method of recovering lithium, including a step of obtaining a leachate, in which a lithium component is dissolved, from cathode material powder, and a step of purifying a lithium component by introducing the leachate into a flow capacitive deionization apparatus.

According to the method of the present invention, by easily removing impurities from a leachate, in which a lithium component is dissolved from cathode material powder, through an electrochemical adsorption and desorption process, high-purity lithium may be recovered, and an eco-friendly benefit may be obtained by reducing an amount of wastewater generated. In addition, by simultaneously performing the purification and filtration of lithium, the process may be simpler than a conventional process, a continuous process is possible, and processing cost and energy may be reduced.

EP 4 768 612 A1

[FIG. 1]

```
S10 ── ┌─────────────────────────────────────┐
        │   WASTE CATHODE MATERIAL POWDER     │
        └─────────────────────────────────────┘
                          │
                          ▼
S20 ── ┌─────────────────────────────────────┐
        │   LEACHATE IN WHICH LITHIUM         │
        │   COMPONENT IS DISSOLVED            │
        └─────────────────────────────────────┘
                          │
                          ▼
S30 ── ┌─────────────────────────────────────┐
        │                                     │
        │   PURIFICATION OF LITHIUM           │
        │   USING FLOW CAPACITIVE             │
        │   DEIONIZATION APPARATUS            │
        │                                     │
        └─────────────────────────────────────┘
                          │
                          ▼
S40 ── ┌─────────────────────────────────────┐
        │   CARBONATION OF LITHIUM            │
        │   COMPONENT                         │
        └─────────────────────────────────────┘
                          │
                          ▼
```

# LITHIUM CRYSTAL SALT

**Description**

[Technical Field]

[Cross-Reference to Related Application]

This application claims priority to Korean Patent Application No. 10-2024-0131492, filed on September 27, 2024, and Korean Patent Application No. 10-2025-0138761, re-filed on September 25, 2025, based on the priority of the above patent, in the Korean Intellectual Property Office, the disclosures of each of which are incorporated herein by reference.

The present invention relates to a method of recovering lithium. More particularly, according to the method of the present invention, by easily removing impurities, especially anionic impurities, from a leachate in which a lithium component is selectively dissolved from waste cathode material powder through an electrochemical adsorption and desorption process, high-purity lithium may be recovered, and an eco-friendly benefit may be obtained by reducing an amount of wastewater generated. In addition, by simultaneously performing the purification and filtration of lithium, the process may be simpler than a conventional process and a continuous process is possible, whereby processing cost and energy may be reduced.

[Background Art]

Demand for lithium-ion batteries has been steadily increasing along with the portable electronic device market since the 1990s, and has recently been increasing further worldwide due to the rapid expansion of the electric vehicle market. This trend could lead to instability in the supply and demand of lithium resources in the near future, and the continuous accumulation of waste batteries could cause major environmental problems. To solve these problems, recycling of waste batteries is a very important technological challenge.

A lithium-ion battery is largely composed of a cathode formed by coating a metal foil such as aluminum with a cathode active material layer, an anode formed by coating a metal foil such as copper with an anode active material layer, a separator that prevents the cathode and anode from mixing, and an electrolyte solution that allows lithium ions to move between the cathode and anode.

A cathode accounts for more than 60 % of the cost of a lithium-ion battery. Lithium cobalt oxide ($LiCoO_2$) is used as the cathode because the lithium cobalt oxide has excellent reversibility, low self-discharge rate, high capacity, and high energy density, and is easy to synthesize. In addition, to reduce the use of expensive cobalt, lithium complex oxides containing Ni, Mn, and the like, such as lithium nickel cobalt manganese oxide ($LiNiMnCoO_2$), lithium manganese oxide ($LiMnO_2$), and lithium iron phosphate ($LiFePO_4$), are used. Since the cathode material contains about 5 to 7 % lithium, a method of recovering lithium from cathode materials of waste lithium-ion batteries is receiving significant attention.

A conventional method of recovering lithium from a lithium-ion battery cathode material adopts a terminal recovery method in which, after all of a cathode material is leached using an acid and an additive for recovering a valuable metal is added, a lithium component contained in the remaining solution is recovered. In such a terminal lithium recovery technology, a large amount of impurities accumulated during the process is contained, and thus an additional purification process must be repeatedly performed to obtain high-purity lithium. In addition, a high-concentration acid solvent is used to leach the lithium component including the valuable metal, a large amount of wastewater is generated due to the repeated processes, and there are problems in that the purity and recovery rate of the recovered lithium are low.

Therefore, there is a need to develop a method of recovering lithium from a waste lithium-ion battery cathode material, which can recover high-purity lithium while reducing wastewater generation and saving the energy, cost, and time required to filter lithium.

[Related Art Documents]

[Patent Documents]

KR 2012-0031832 A

[Disclosure]

[Technical Problem]

Therefore, the present invention has been made in view of the above problems, and it is one object of the present invention to provide a method of recovering lithium. According to the method of the present invention, by easily removing impurities, especially anionic impurities, from a leachate in which a lithium component is selectively dissolved from waste cathode material powder through an electrochemical adsorption and desorption process, high-purity lithium may be recovered, and an eco-friendly benefit may be obtained by reducing an amount of wastewater generated. In addition, by simultaneously performing the purification and filtration of lithium, the process may be simpler than a conventional process and a continuous process is possible, whereby processing cost and energy may be reduced.

The above and other objects can be accomplished by the present invention described below.

[Technical Solution]

I) In accordance with one aspect of the present invention, provided is a method of recovering lithium, the method including obtaining a leachate, in which a lithium component is dissolved, from cathode material powder; and purifying a lithium component by introducing the leachate into a flow capacitive deionization apparatus.

II) In accordance with another aspect of the present invention, provided is a method of recovering lithium, the method including adsorbing lithium cations onto a positive membrane flow electrode by passing a leachate, in which a lithium component is dissolved, between an anion adsorber including a negative membrane flow electrode and a cation adsorber including the positive membrane flow electrode; desorbing the lithium cations from the positive membrane flow electrode by passing the positive membrane flow electrode, on which the lithium cations are adsorbed, between a current collector and a cation exchange membrane; and collecting the desorbed lithium cations with deionized water.

III) In accordance with still another aspect of the present invention, provided is a method of recovering lithium, the method including (a) obtaining cathode material powder by crushing and/or pulverizing a lithium-ion battery cathode; (b) obtaining a leachate, in which a lithium component is dissolved, by adding a leaching solvent to the cathode material powder; (c) purifying the lithium component by passing the leachate through a flow capacitive deionization apparatus; and (d) obtaining the purified lithium component as a lithium crystal salt.

IV) According to I) to III), a heat-treated product may be obtained by preferably heat-treating the cathode material powder obtained in step (a) with a carbon-containing reducing agent, and the heat-treated product may be crushed and/or pulverized and then may be introduced into step (b).

V) According to I) to IV), the heat treatment may be performed preferably at a temperature of 550 to 750 °C under a reducing gas or an inert gas.

VI) According to I) to V), the carbon-containing reducing agent may be preferably used in an amount of 0.3 to 3 mol per 1 mol of a cathode active material in the cathode material powder.

VII) According to I) to VI), the carbon-containing reducing agent may preferably be a carbon-containing organic substance, a carbon-containing inorganic substance, a carbon-based anode material, or a mixture of two or more thereof.

VIII) According to I) to VII), in step (b), preferably, the cathode material powder obtained in step (a) may be leached with water to obtain a lithium-dissolved leachate and a leaching residue, and the leachate may be collected by separating the leachate and the leaching residue.

IX) According to I) to VIII), in step (b), preferably, the cathode material powder obtained in step (a) may be added to a mixture of an acidic solution and an oxidizing agent to obtain a lithium-dissolved leachate and a leaching residue, and the leachate may be collected by separating the leachate and the leaching residue.

X) According to I) to IX), in step (b), the acidic solution may preferably contain an acid at a concentration of 0.1 to 1.5 mol/L.

XI) According to I) to X), in step (b), the acidic solution may be preferably added in an acid amount of 0.1 to 1.5 mol per 1 mol of a cathode active material in the cathode material powder.

XII) According to I) to XI), in step (b), in step (b), the oxidizing agent may be preferably added in an amount of 0.5 to 2.3 mol per 1 mol of a cathode active material in the cathode material powder.

XIII) According to I) to XII), in step (b), the oxidizing agent may include preferably one or more selected from the group consisting of hydrogen peroxide, sodium persulfate, potassium persulfate, ammonium persulfate, oxygen, and air.

XIV) According to I) to XIII), preferably, the leachate obtained in step (b) may be subjected to impurity removal step (b'), and then may be introduced to step (c).

XV) According to I) to XIV), impurity removal step (b') may be preferably a step of filtering the leachate with a nanofiltration membrane.

XVI) According to I) to XV), in impurity removal step (b'), one or more impurity removers selected from the group consisting of lithium hydroxide (LiOH); a basic compound; cathode material powder; and a filtrate remaining after obtaining the purified lithium component as a lithium crystal salt may be preferably added to the leachate.

XVII) According to I) to XVI), in step (c), when purifying the lithium component, purification and filtration of the lithium component may be preferably performed simultaneously.

XVIII) According to I) to XVII), in step (c), in the leachate introduced into the flow capacitive deionization apparatus, a total content of metal components, excluding lithium, may be preferably 1% by weight or less.

XIX) According to I) to XVIII), in step (c), the flow capacitive deionization apparatus may preferably include a lithium leachate circulation tank; an anion adsorber including a negative membrane flow electrode circulation tank, a current collector, and an anion exchange membrane; a cation adsorber including a cation exchange membrane, a current collector, and a positive membrane flow electrode circulation tank; a cation desorber including a current collector and a cation exchange membrane; and a cation collector including a deionized water circulation tank, an anion exchange membrane, a current collector, and a negative membrane flow electrode circulation tank.

XX) According to I) to XIX), the flow capacitive deionization apparatus may preferably include adsorbing lithium cations onto a positive membrane flow electrode by passing a leachate, in which a lithium component is dissolved, between the anion adsorber including a negative membrane flow electrode and the cation adsorber including the positive membrane flow electrode; desorbing the lithium cations from the positive membrane flow electrode by passing the positive membrane flow electrode, on which the lithium cations are adsorbed, between the current collector and the cation exchange membrane; and collecting the desorbed lithium cations with deionized water.

XXI) According to I) to XX), preferably, the flow capacitive deionization apparatus may further include adsorbing anions onto the negative membrane flow electrode by passing a leachate, in which a lithium component is dissolved, between the cation adsorber including the positive membrane flow electrode and the anion adsorber including the negative membrane flow electrode; desorbing the anions from the negative membrane flow electrode by passing the negative membrane flow electrode, on which the anions are adsorbed, between the current collector and the anion exchange membrane; and collecting the desorbed anions with deionized water.

XXII) According to I) to XXI), the positive membrane flow electrode and the negative membrane flow electrode may each preferably include an active material, a conductive additive, and a solvent.

XXIII) According to I) to XXII), the active material may preferably include one or more selected from the group consisting of activated carbon, carbon beads, mesoporous carbon, carbon nanotubes, graphene, carbon black, activated carbon fiber, and $MnO_2$.

XXIV) According to I) to XXIII), preferably, the conductive additive may include one or more selected from the group consisting of carbon black, carbon nanotubes, graphene, and reduced graphene oxide(rGO), and may not be identical to the active material.

XXV) According to I) to XXIV), the solvent may be preferably sodium chloride (NaCl) solution, deionized water, or distilled water.

XXVI) According to I) to XXV), the lithium crystal salt obtained in step (d) may preferably include one or more selected from the group consisting of LiOH, $Li_2CO_3$, LiCl, $Li_2SO_4$, and $LiNO_3$.

XXVII) According to I) to XXVI), in step (d), the purified lithium component may be preferably carbonated to obtain lithium carbonate.

XXVIII) According to I) to XXVII), in the lithium crystal salt obtained in step (d), purity of lithium may be preferably 99 % by weight or more.

XXIX) According to I) to XXVIII), in step (d), the filtrate remaining after obtaining the purified lithium component as a lithium crystal salt may be preferably introduced into the flow capacitive deionization apparatus to be reused.

XXX) According to I) to XXIX), the cathode material may preferably include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co).

XXXI) According to I) to XXX), the lithium-ion battery cathode may be preferably a waste lithium-ion battery cathode.

XXXII) In accordance with yet another aspect of the present invention, provided is an apparatus for recovering lithium, including a lithium leachate circulation tank; an anion adsorber including a negative membrane flow electrode circulation tank, a current collector, and an anion exchange membrane; a cation adsorber including a cation exchange membrane, a current collector, and a positive membrane flow electrode circulation tank; a cation desorber including a current collector and a cation exchange membrane; and a cation collector including a deionized water circulation tank, an anion exchange membrane, a current collector, and a negative membrane flow electrode circulation tank, wherein lithium cations contained in the lithium leachate pass through the cation exchange membrane of the adsorber and move to the positive membrane flow electrode circulation tank, and then pass through the cation exchange membrane of the desorber to be collected in the deionized water circulation tank of the collector.

[Advantageous Effects]

According to the present invention, the present invention has an effect of providing a method of recovering lithium. According to the method of the present invention, by purifying a leachate, in which a lithium component is dissolved from waste cathode material powder, through a flow capacitive deionization apparatus, which relates to an electrochemical adsorption and desorption process, impurities, particularly anionic impurities, can be easily removed, thereby allowing lithium to be recovered with high purity. In addition, after the purified lithium component is obtained as lithium crystal salt, a lithium recovery rate can be maximized through recirculation of the remaining filtrate. In addition, the process can be simplified, a continuous process is possible, energy can be saved, and an eco-friendly benefit can be obtained by reducing an amount of wastewater generated.

In addition, the purity of lithium recovered according to the present invention can be 99 % by weight or more.

[Description of Drawings]

The drawings attached to this specification illustrate embodiments of the present invention and, together with the detailed description given below, serve to further understand the technical idea of the present invention. Therefore, the present invention should not be construed as being limited to the matters described in these drawings.

FIG. 1 is a flowchart for explaining a method of recovering lithium from waste lithium-ion battery cathode material powder as one embodiment according to the present invention.

FIG. 2 is a flowchart for explaining a method of recovering lithium from waste lithium-ion battery cathode material powder according to Example 1 of the present invention.

FIG. 3 is a flowchart for explaining a method of recovering lithium from waste lithium-ion battery cathode material powder according to Example 2 of the present invention.

FIG. 4 is a flowchart for explaining a method of recovering lithium from waste lithium-ion battery cathode material powder according to Example 3 of the present invention.

FIG. 5 is a flowchart for explaining a method of recovering lithium from waste lithium-ion battery cathode material powder as one embodiment according to the present invention.

FIG. 6 is a flowchart for explaining a method of recovering lithium from waste lithium-ion battery cathode material powder as one embodiment according to the present invention.

FIG. 7 is a diagram schematically illustrating a process for purifying a lithium component by introducing a leachate, in which the lithium component is dissolved, into a flow capacitive deionization (FCDI) apparatus including an anion adsorber, a cation adsorber, a cation desorber, and a cation collector, according to one embodiment of the present invention.

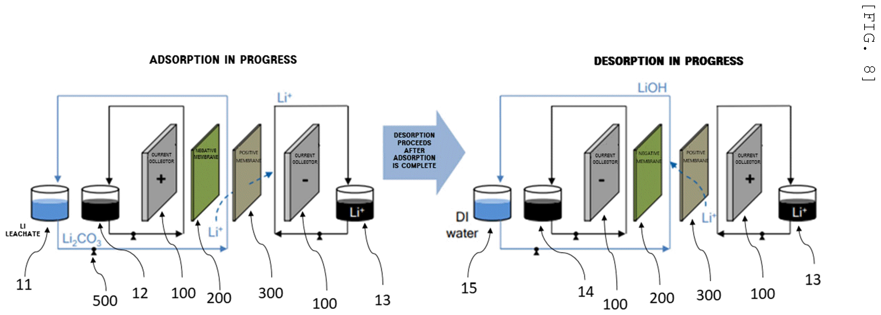

FIG. 8 is a diagram schematically illustrating a process according to one embodiment of the present invention, wherein after a process of adsorbing lithium cations onto a positive membrane flow electrode is performed by introducing a leachate, in which a lithium component is dissolved, into a flow capacitive deionization apparatus composed of a single module including an anion adsorber and a cation adsorber, a process of desorbing and recovering lithium from the positive membrane flow electrode, on which the lithium cations are adsorbed, is performed by using the cation adsorber as a cation desorber and the anion adsorber as a cation collector.

FIG. 9 is a diagram schematically illustrating a process to which an adsorption negative membrane flow electrode regenerator is added to the process of purifying a lithium component by introducing a leachate, in which the lithium component is dissolved, into a flow capacitive deionization apparatus including an anion adsorber, a cation adsorber, a cation desorber, and a cation collector, according to one embodiment of the present invention.

FIG. 10 is a photograph of the $Li_2CO_3$ powder obtained from Example 1 in a transparent container.

FIG. 11 is a graph showing the results of an XRD analysis of the $Li_2CO_3$ obtained in Example 1.

FIG. 12 is a graph showing the results of an XRD analysis of the $Li_2CO_3$ obtained in Comparative Example 1.

[Best Mode]

While studying a method of recovering high-purity lithium from a lithium-ion battery cathode material, the present inventors found that, when a leachate in which a lithium component is dissolved was obtained from waste cathode material powder and lithium was recovered from the leachate through a predetermined flow capacitive deionization apparatus, the purity and recovery rate of lithium were greatly improved, the process was simplified, and a continuous process was possible, thereby improving efficiency. Based on these results, the present inventors conducted further studies to complete the present invention.

Hereinafter, a method of recovering lithium according to the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

## Method of recovering lithium

A method of recovering lithium according to the present invention includes a step of obtaining a leachate, in which a lithium component is dissolved, from cathode material powder and a step of purifying a lithium component by introducing the leachate into a flow capacitive deionization apparatus. In this case, by performing purification through flow capacitive deionization, which is an electrochemical adsorption and desorption process, impurities, particularly anion impurities, may be easily removed, whereby high-purity lithium may be recovered. In addition, the lithium recovery rate may be maximized through the recirculation of a filtrate remaining after obtaining the purified lithium component as a lithium crystal salt or a lithium-containing waste liquid. In addition, the process may be simplified and energy may be saved, and an eco-friendly benefit may be obtained by reducing an amount of wastewater generated.

In addition, the method of recovering lithium according to the present invention includes a step of adsorbing lithium cations onto a positive membrane flow electrode by passing a leachate, in which a lithium component is dissolved, between an anion adsorber including a negative membrane flow electrode and a cation adsorber including the positive membrane flow electrode, a step of desorbing the lithium cations from the positive membrane flow electrode by passing the positive membrane flow electrode, on which the lithium cations are adsorbed, between a current collector and a cation exchange membrane, and a step of collecting the desorbed lithium cations with deionized water. In this case, through flow capacitive deionization, which is an electrochemical adsorption and desorption process, impurities, particularly anion impurities, may be easily removed, whereby high-purity lithium may be recovered. In addition, the lithium recovery rate may be maximized through the recirculation of a filtrate remaining after the purified lithium component is obtained as a lithium crystal salt or a lithium-containing waste liquid. In addition, the process may be simplified and energy may be saved, and an eco-friendly benefit may be obtained by reducing an amount of wastewater generated.

In addition, the method of recovering lithium according to the present invention includes step (a) of obtaining cathode material powder by crushing and/or pulverizing a lithium-ion battery cathode; step (b) of obtaining a leachate, in which a lithium component is dissolved, from cathode material powder; step (c) of purifying the lithium component by passing the leachate through a flow capacitive deionization apparatus; and step (d) of obtaining the purified lithium component as a lithium crystal salt. In this case, by performing purification through flow capacitive deionization, which is an electrochemical adsorption and desorption process, impurities, particularly anion impurities, may be easily removed, whereby high-purity lithium may be recovered. In addition, the lithium recovery rate may be maximized through the recirculation of a filtrate remaining after obtaining the purified lithium component as a lithium crystal salt or a lithium-containing waste liquid. In addition, the process may be simplified and energy may be saved, and an eco-friendly benefit may be obtained by reducing an amount of wastewater generated.

Hereinafter, each step of the method of recovering lithium is described in detail.

## (a) Obtaining cathode material powder by crushing and/or pulverizing a lithium-ion battery cathode

The method of recovering lithium according to the present invention includes step (a) of obtaining cathode material powder by crushing and/or pulverizing a lithium-ion battery cathode. In this case, since a cathode active material layer and a current collector are easily separated from a waste cathode in which the cathode active material layer including a cathode active material and a conductive material is bonded on the current collector by a binder, the cathode active material layer may be obtained as powder, and a lithium component may be easily dissolved in a subsequent process.

The cathode material herein means a material including a cathode active material or is a cathode active material, and may include, for example, a cathode active material, a conductive material, a binder, and aluminum introduced during the crushing and/or pulverizing process.

For example, the cathode of the waste lithium-ion battery may include a discarded lithium-ion battery cathode, defective products generated during a cathode coating process, or cathode scraps discarded after electrode plate cutting, preferably a discarded lithium-ion battery cathode. In this case, economic benefits may be obtained by recovering high-value lithium and recycling resources.

For example, the crushing may be cutting or shredding of discarded lithium-ion battery cathodes, and may preferably be performed using dry pulverizing equipment. Specifically, the crushing may be performed using a hand-mill, a pin-mill, a disc-mill, a cutting-mill, or a shredder.

For example, the crushed cathode may be pulverized using a mixer, a hand-mill, a pin-mill, a disc-mill, a cutting-mill, or a hammer-mill, preferably using a mixer. In this case, current collector pieces may be chopped into small pieces, and cathode material may be separated from the current collector pieces.

For example, the pulverized cathode material may be obtained as powder through a sieve. In this case, leaching may be done more easily.

For example, the sieving may be performed with a sieve of 30 to 500 mesh, preferably 32 to 400 mesh, more preferably 35 to 325 mesh. In this case, current collector pieces separated during the crushing and/or pulverizing process may be separated, and the size of the crushed and/or pulverized cathode active material layer may be made uniform, such that a lithium component may be easily dissolved in a subsequent process.

In addition, the cathode material powder is not particularly limited to a specific preparation method, provided that the method is a method of preparing a cathode material powder from a waste lithium-ion battery cathode that is conventionally practiced in the technical field to which the present invention pertains. When the powder meets the definition of the cathode material powder according to the present invention, the powder may also be commercially purchased and used.

For example, the cathode material powder obtained in step (a) may further include step (a') of heat-treating with a carbon-containing reducing agent to obtain a heat-treated product, and crushing the obtained heat-treated product, and the crushed heat-treated product may be introduced to step (b). In this case, by removing a binder and a conductive material from the cathode material powder obtained from a waste cathode through heat treatment, a lithium component may be easily dissolved in a subsequent process.

For example, the heat treatment may be performed under a reducing gas or an inert gas, preferably under nitrogen ($N_2$) gas atmosphere. In this case, cathode material powder may be easily reduced to recover high-purity lithium with a high yield.

For example, the reducing gas or inert gas may have a flow rate of 1 to 20 L/min, preferably 3 to 17 L/min, more preferably 5 to 15 L/min. Within this range, the reaction efficiency may be excellent

For example, the heat treatment may be performed at 550 to 750 °C, preferably 570 to 730 °C, more preferably 600 to 700 °C, still more preferably 600 to 670 °C. Within this range, lithium in the cathode material may be converted to a high level of lithium compound, and processing costs may be reduced.

After the heat treatment, furnace cooling may be performed.

In the present disclosure, furnace cooling refers to the operation of cooling heat-treated materials in a furnace, and refers to the method of slowly cooling the heat-treated materials at a high temperature inside the furnace.

For example, the rate of temperature increase for reaching the heat treatment temperature may be 1 to 20 °C/min, preferably 1 to 10 °C/min, more preferably 1 to 7 °C/min, and still more preferably 1 to 5 °C/min. Within this range, the heat treatment may be implemented without straining heat treatment equipment, and there is an advantage of not causing thermal shock to the cathode material.

For example, the heat treatment may be performed for 0.5 to 7 hours, preferably 1.5 to 6.5 hours, more preferably 2.5 to 6 hours, still more preferably 3.5 to 5.5 hours. Within this range, the binder and conductive material within the cathode material may be removed, and lithium may be converted to a lithium compound by carbon in high yield.

For example, the heat treatment step may not include any reducing agent other than the carbon-containing reducing agent. In this case, impurities are reduced, which provides the advantage of increasing the purity and recovery rate of the recovered lithium compound.

In the present disclosure, the heat treatment time refers to the processing time at the corresponding heat treatment temperature, and the time required to reach that heat treatment temperature is not included in the calculation.

For example, the heat treatment may be performed under atmospheric pressure. In this case, processing costs may be reduced and the process may be safe.

In the present disclosure, atmospheric pressure may be normal pressure, and refers to the pressure of air (the atmosphere) as 1 atm.

For example, the heat treatment may be performed using various types of furnaces, preferably a box-type furnace, more preferably a rotary kiln. In this case, continuous processing is possible, productivity may be excellent, and the reduction reaction may be promoted, resulting in an excellent conversion rate to a lithium compound.

For example, for the crushing of the heat-treated product, a milling machine may be used, preferably a roll press, ball mill, or pin mill may be used, and more preferably a roll press may be used. In this case, lithium may be easily dissolved in a subsequent process by uniformly crushing a heat-treated product to increase the specific surface area thereof.

For example, after crushing, the heat-treated product may have a particle size of 0.5 to 100 $\mu$m, preferably 3 to 70 $\mu$m, more preferably 3 to 50 $\mu$m, still more preferably 5 to 30 $\mu$m, still more preferably 5 to 20 $\mu$m. Within this range, lithium may be easily dissolved in a subsequent process.

In the present disclosure, the particle size may be measured by a measurement method conventionally used in the technical field to which the present invention pertains. For example, the particle size may be measured using a sieve.

The carbon-containing reducing agent may be used in an amount of preferably 0.3 to 3 mol, more preferably 0.3 to 2 mol, still more preferably 0.7 to 1.5 mol, still more preferably 0.9 to 1.2 mol per 1 mol of a cathode active material in the cathode material powder. Within this range, heat treatment efficiency may be increased, and reaction time may be reduced.

In the present disclosure, the number of moles of the cathode active material in the cathode material powder may be determined by assuming the entire mass of the cathode material powder is the mass of the cathode active material. This is because, although the weight of the cathode active material or the cathode material powder includes a conductive material, a binder, and aluminum introduced during the crushing and/or pulverizing process in addition to the cathode active material, the amounts thereof are trace and do not have a significant effect.

For example, the carbon-containing reducing agent may be a carbon-containing organic substance, a carbon-containing inorganic substance, an anode material, or a mixture thereof, preferably graphite. In this case, the carbon-containing reducing agent may easily react with lithium in the lithium-ion battery cathode material.

The graphite may have a fixed carbon content of preferably 90 % by weight or more, more preferably 95 % by weight or more, still more preferably 98 % by weight or more. Within this range, reaction with lithium in the cathode material may be easy.

In the present disclosure, the fixed carbon content (by weight) refers to the combustible residue remaining after volatile components are volatilized from carbon, and denotes the content excluding volatile components, moisture, and ash in carbon.

The graphite may preferably be graphite derived from an anode material. In this case, production costs may be reduced and resources may be recycled.

For example, the cathode material may include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co). In this case, reversible capacity and thermal stability may be excellent.

As another specific example, the cathode material may include a compound represented by Chemical Formula 1 below.

$$[\text{Chemical Formula 1}] \qquad Li_aNi_xMn_yCo_zM_wO_{2+\delta}$$

In Chemical Formula 1, M includes one or more selected from the group consisting of B, W, Al, Ti, and Mg, $1 < a \leq 1.1$, $0 < x < 0.95$, $0 < y < 0.8$, $0 < z < 1.0$, $0 \leq w \leq 0.1$, $-0.02 \leq \delta \leq 0.02$, and $x+y+z+w=1$.

For example, the lithium-ion battery cathode material may be a discarded lithium-ion battery cathode. In this case, high-value lithium may be recovered along with Ni, Co, Mn, and the like, providing economic benefits through resource recycling.

<u>(b) Obtaining a leachate, in which a lithium component is dissolved, from cathode material powder</u>

The method of recovering lithium according to the present invention includes step (b) of obtaining a leachate, in which a lithium component is dissolved, from cathode material powder. In this case, in the subsequent process, the process of purifying and filtering a lithium component by introducing the leachate into a flow capacitive deionization apparatus may be performed smoothly, and the purity and recovery rate of recovered lithium may be increased.

For example, the cathode material powder introduced into step (b) may be cathode material powder obtained by crushing and/or pulverizing a lithium-ion battery cathode, or cathode material powder obtained after heat-treating the cathode material powder with a carbon-containing reducing agent.

For example, in step (b), the leachate in which a lithium component is dissolved may be obtained by including step (b-1) of leaching the cathode material powder obtained in step (a) with water to obtain a lithium-dissolved leachate and a leaching residue, and separating the lithium-dissolved leachate and the leaching residue. In this case, since an acid is not used, an eco-friendly benefit may be obtained, production costs may be reduced, and the leachate has few impurities such as Ni, Co, and Mn, allowing for the recovery of a high-purity lithium compound. Furthermore, since the leaching residue contains large amounts of Ni, Co, Mn, etc., there is an economic advantage in that the leaching residue may be easily prepared as a precursor raw material.

In step (b-1), the cathode material powder may be preferably cathode material powder obtained after heat-treating the cathode material powder with a carbon-containing reducing agent. In this case, since lithium is dissolved without using an acid, an eco-friendly benefit may be obtained and production costs may be reduced. In addition, because the leachate has few impurities such as Ni, Co, and Mn, there is an advantage in recovering a high-purity lithium compound.

In step (b-1), the cathode material may preferably include one or more selected from the group consisting of lithium cobalt oxide; lithium manganese oxide; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co). In this case, since lithium is easily dissolved even without using an acid, there is an advantage that the purity and recovery rate of lithium are increased.

For example, the solid-to-liquid ratio of the cathode material powder to water may be 1g/20ml to 1g/40ml, preferably 1g/22ml to 1g/37ml, more preferably 1g/25ml to 1g/35ml. Within this range, the recovery rate of lithium may be increased because the lithium component is sufficiently dissolved.

In the present disclosure, the solid-to-liquid ratio means the volume of a liquid with respect to the weight of a solid; that is, the solid-to-liquid ratio means the volume of water (mL) with respect to the content (g) of the cathode material powder.

For example, step (b-1) may be performed by adding water to the cathode material powder and then stirring with a stirrer at 1 °C to room temperature, preferably at room temperature. In this case, the time for the lithium component to dissolve may be reduced.

In the present disclosure, room temperature may be a point within the range of 20 ± 5 °C.

For example, the stirring speed may be 300 to 700 rpm, preferably 400 to 600 rpm, more preferably 450 to 550 rpm. Within this range, the lithium component may be easily leached from the cathode material powder.

For example, the stirring time may be 0.5 hours or more, preferably 0.5 to 3 hours, more preferably 0.5 to 2.5 hours, still more preferably 1 to 2 hours. Within this range, a lithium component may be sufficiently dissolved from the cathode material powder, allowing lithium to be recovered with high purity and high recovery rate.

For example, the water may be neutral water, preferably tap water, distilled water, or deionized water, more preferably distilled water. In this case, a lithium component may be easily leached without including an acid, an eco-friendly benefit may be obtained, and production costs may be reduced.

For example, since the dissolution of a lithium component is performed using water without an acid, the content of impurities such as Ni, Co, and Mn is low in the leachate in which a lithium component is dissolved, such that high-purity lithium may be easily recovered.

For example, in step (b-1), the separation of the leachate and the leaching residue may be performed by using filtration, preferably by using reduced pressure filtration. In this case, the leachate and the leaching residue may be easily separated with only a simple process, processing costs may be reduced, and an eco-friendly benefit may be obtained.

The reduced pressure filtration may preferably be vacuum filtration, specifically vacuum filtration using a filtration flask. In this case, the leachate and the leaching residue may be easily separated.

In the present invention, the vacuum filtration is not particularly limited as long as it is vacuum filtration typically used in the technical field to which the present invention pertains, and the vacuum filtration may include, for example, filtration under partial vacuum or reducedpressure conditions.

For example, in step (b), the leachate in which a lithium component is dissolved may be obtained by including step (b-2) of adding cathode material powder to a mixture of an acidic solution and an oxidizing agent, leaching the resulting mixture to obtain a lithium-dissolved leachate and a leaching residue, and separating the leachate from the leaching residue. In this case, the lithium component may be selectively leached.

In step (b-2), the cathode material powder may be preferably cathode material powder obtained by crushing and/or pulverizing a lithium-ion battery cathode. In this case, lithium may be easily dissolved, which may increase the purity and recovery rate of lithium.

In step (b-2), the cathode material powder may preferably include cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co). In this case, lithium may be easily dissolved, which may increase the purity and recovery rate of lithium.

For example, the acidic solution may contain an acid at a concentration of 0.1 to 1.5 mol/L, preferably 0.2 to 1.3 mol/L, more preferably 0.3 to 1.0 mol/L, still more preferably 0.4 to 0.8 mol/L. Within this range, the lithium component in the cathode material powder may be selectively dissolved. In addition, by using a low-concentration acid, the amount of wastewater generated may be reduced, and an eco-friendly benefit may be obtained.

For example, the acidic solution may be include an acid at a concentration of 0.5 to 1.5 mol, preferably 0.55 to 1.3 mol, more preferably 0.60 to 1.2 mol per 1 mol of a cathode active material in the cathode material powder. Within this range, the lithium component may be selectively leached.

The acidic solution is not particularly limited as long as the acidic solution is an acid component that may adjust the pH of the mixture of an acidic solution and an oxidizing agent to a range of 1 to 5. For example, the acidic solution may be a solution, preferably an aqueous solution, including one or more selected from the group consisting of sulfuric acid, hydrochloric acid, hypochlorous acid, nitric acid, carbonic acid, acetic acid, and oxalic acid. Preferably, the acidic solution may be a solution, preferably an aqueous solution, including hydrochloric acid or sulfuric acid. In this case, the lithium component may be selectively leached.

For example, the oxidizing agent may be included at a concentration of 0.5 to 2.3 mol, preferably 0.7 to 2.2 mol, more preferably 1.0 to 2.2 mol, still more preferably 1.2 to 2.2 mol, still more preferably 1.5 to 2.2 mol, still more preferably 1.8 to 2.2 mol, still more preferably 1.9 to 2.1 mol per 1 mol of a cathode active material in the cathode material powder. Within this range, there is an advantage in that the yield and purity of lithium are increased because metal components other than the lithium component are precipitated and easily removed.

For example, the oxidizing agent may be in a solid, liquid, or gaseous form, preferably in a liquid form, more preferably a solution including an oxidizing agent, still more preferably an aqueous solution including an oxidizing agent. In this case, lithium may be selectively recovered.

For example, the solution including an oxidizing agent may include an oxidizing agent at a concentration of 20 to 40 % by weight, preferably 25 to 35 % by weight, more preferably 30 to 35 % by weight. Within this range, the selective leaching of lithium may be facilitated.

For example, the oxidizing agent may include one or more selected from the group consisting of hydrogen peroxide, sodium persulfate, potassium persulfate, ammonium persulfate, oxygen, and air, preferably hydrogen peroxide. In this case, the lithium component in the cathode material may be selectively leached.

The solution containing an oxidizing agent may be an aqueous hydrogen peroxide solution including hydrogen peroxide in an amount of preferably 20 to 40 % by weight, more preferably 25 to 35 % by weight, still more preferably 30 to 35 % by weight. In this case, the lithium component in the cathode material powder may be selectively leached.

For example, the mixture of an acidic solution and an oxidizing agent may have a pH of 1 to 5, preferably 2 to 4, more preferably 2 to 3. Within this range, the lithium component may be easily dissolved. Furthermore, since metal components other than lithium precipitate, the metal components may be easily removed as leaching residue.

In the present disclosure, pH may be measured by a measurement method commonly used in the technical field to which the present invention belongs. Unless otherwise specified, pH may be measured using a general pH measuring device at room temperature. Specifically, Thermo Scientific Orion Star A Series may be used.

For example, step (b-2) may be performed at room temperature. In this case, there is an advantage in that the yield and purity of lithium are increased because metal components other than the lithium component are precipitated and easily removed.

For example, step (b-2) may be performed under stirring. In this case, the lithium component may be dissolved, and the time for metal components other than the lithium component to precipitate may be reduced.

For example, the stirring speed may be 300 to 700 rpm, preferably 350 to 650 rpm, more preferably 400 to 600 rpm, still more preferably 450 to 550 rpm. Within this range, the lithium component may be easily dissolved, and a leachate including the lithium component and a leaching residue may be obtained.

For example, the stirring time may be 10 to 60 minutes, preferably 20 to 50 minutes, more preferably 30 to 40 minutes. Within this range, the time for the lithium component to dissolve may be reduced.

For example, the separation of leachate and leaching residue obtained in step (b-2) may be performed by filtration, preferably reduced pressure filtration. In this case, leachate and leaching residue may be easily separated through a simple process, reducing processing costs and providing an eco-friendly benefit.

In addition, in step (b), the leachate in which a lithium component is dissolved may be obtained by including step (b-3) of obtaining a lithium-dissolved leachate and a leaching residue by adding an oxidizing agent to a solution in which cathode material powder is dissolved in an acidic solution, and separating the lithium-dissolved leachate and the leaching residue to obtain leachate. In this case, the lithium component may be selectively leached.

In step (b-3), the cathode material powder may be preferably cathode material powder obtained by crushing and/or pulverizing a lithium-ion battery cathode. In this case, lithium may be selectively dissolved, and thus the purity and recovery rate of lithium may be increased.

In step (b-3), the cathode material powder may be preferably lithium iron phosphate compound. In this case, lithium may be selectively dissolved, and thus the purity and recovery rate of lithium may be increased.

For example, in step (b-3), the oxidizing agent may be fed to the solution continuously or batchwise, preferably continuously. Specifically, the oxidizing agent may be fed continuously while stirring. In this case, lithium may be sufficiently leached from the solution. For example, the batchwise feed may be done by feeding the oxidizing agent batchwise at the start of stirring or immediately before stirring. In this case, lithium may be selectively leached.

In the present disclosure, "continuous feed" means that components are not fed batchwise. For example, within a range of leaching time, components may be fed for 10 minutes or more or 30 minutes or more in drop-by-drop, little-by-little, step-by-step, or continuous flow.

In step (b-3), the type, concentration, input amount, and leaching conditions of the acidic solution and oxidizing agent may be within the same range as step (b-2) of this description.

For example, the leachate obtained in step (b) may be input into step (c) after performing step (b') to remove impurities such as polyvalent cations. In this case, the purity and recovery rate of recovered lithium may be further increased.

For example, in step (b') of removing impurities, step (b'-1) of filtering the leachate with a nanofiltration membrane may be further performed. In this case, since polyvalent cations are removed by the microporosity and pressure of the nanofiltration membrane, the purity and recovery rate of recovered lithium may be further increased.

For example, the nanofiltration membrane may have a molecular weight cutoff (MWCO) of 100 to 1,000 Da, preferably 200 to 700 Da, more preferably 200 to 500 Da. In this case, the purity of lithium may be further improved because polyvalent cations such as Fe, Al, Ni, Co, or Mn are removed.

In the present disclosure, a molecular weight cutoff is an indicator that is measured indirectly because the molecular weight cutoff is difficult to directly measure the size of fine pores in a filtration membrane. The molecular weight cutoff represents separation performance in units of molecular weight, Dalton (Da), and is defined as the minimum molecular weight of a solute that exhibits a rejection rate of 90 % or more by the membrane. The molecular weight cutoff may be measured by a measurement method conventionally used in the technical field to which the present invention pertains. Specifically, the molecular weight cutoff of the separator may be defined as the molecular weight of a solute when the removal rate of the solute is 90 % or more, by operating a separator evaluation apparatus with a 1,000 mg/L non-charged solute dissolved in a solvent under conditions of a temperature of 25 °C and a pressure of 75 psig.

In addition, for example, impurity removal step (b') may include step (b'-2) of adding one or more impurity removers selected from the group consisting of lithium hydroxide (LiOH); a basic compound; cathode material powder; and a filtrate remaining to the leachate after obtaining the purified lithium component as a lithium crystal salt. In this case, the addition of impurity remover increases the pH of leachate, allowing impurities to precipitate and be easily removed, thus increasing the purity and recovery rate of lithium.

In step (b'-2), the basic compound, for example, may be a metal hydroxide, a metal carbonate, or a mixture thereof. In this case, since polyvalent cations in the leachate are precipitated and easily removed, the purity and recovery rate of lithium may be increased.

In step (b'-2), the metal hydroxide may preferably be sodium hydroxide, potassium hydroxide, or a mixture thereof. In this case, since polyvalent cations in the leachate are precipitated and easily removed, the purity and recovery rate of lithium may be increased.

The metal carbonate may preferably be sodium carbonate, potassium carbonate, or a mixture thereof. In this case, since polyvalent cations in the leachate are precipitated and easily removed, the purity and recovery rate of lithium may be increased.

In step (b'-2), the lithium hydroxide, for example, may be used in an amount of 0.05 to 0.3 mol, preferably 0.10 to 0.25 mol, more preferably 0.15 to 0.20 mol, per 1 mol of the cathode active material in the leachate. Within this range, since polyvalent cations in the leachate are precipitated and easily removed, the purity and recovery rate of lithium may be increased.

In step (b'-2), the basic compound, for example, may be used in an amount of 0.05 to 0.3 mol, preferably 0.10 to 0.25 mol, more preferably 0.15 to 0.20 mol, per 1 mol of the cathode active material in the leachate. Within this range, since polyvalent cations in the leachate are precipitated and easily removed, the purity and recovery rate of lithium may be increased.

The impurity remover, for example, may be added such that the pH of the leachate becomes 3 or higher, preferably 4 or higher, more preferably 5 or higher, still more preferably 6 or higher, still more preferably 6 to 9, still more preferably pH 6 to 8. In this case, since polyvalent cations are precipitated and easily removed, the purity and recovery rate of lithium may be increased.

In step (b'-2), the cathode material powder used as an impurity remover may preferably be cathode material powder obtained by crushing and/or pulverizing a lithium-ion battery cathode. In this case, since the cathode material powder includes a large amount of lithium, when the cathode material powder is added to the leachate, the pH of the leachate is increased, whereby polyvalent cations are precipitated and easily removed, and thus the purity and recovery rate of lithium may be increased.

The cathode material powder, when used as an impurity remover, for example, may be added in an amount including 0.1 to 0.7 mol, preferably 0.2 to 0.5 mol, more preferably 0.2 to 0.3 mol of lithium in the cathode material powder, per 1 mol of lithium in the leachate. Within this range, the pH of the leachate is increased, whereby polyvalent cations such as Fe, Al, Ni, Co, or Mn are precipitated and easily removed, and thus the purity and recovery rate of lithium may be increased.

When cathode material powder is added as an impurity remover, H+ in the leachate is consumed through an additional reaction with unreacted acid components and an oxidizing agent in the leachate, thereby increasing the pH.

In step (b'-2), the filtrate is preferably a filtrate remaining after obtaining the purified lithium component as a lithium crystal salt. Specifically, the filtrate is a filtrate remaining after a purified lithium component is obtained through a flow capacitive deionization apparatus and then obtained as a lithium crystal salt. This filtrate includes a small amount of lithium, so when the filtrate is added to the leachate, the pH of the leachate is increased, whereby polyvalent cations are precipitated and easily removed, and thus the purity and recovery rate of lithium may be increased.

Since the filtrate is a solution in which lithium carbonate and/or lithium hydroxide is dissolved and thus exhibits basicity, when the filtrate is added to the leachate as an impurity remover, the pH is increased by consuming H+ through a reaction such as Reaction Formula 1 or 2 below, while simultaneously diluting the leachate.

[Reaction Formula 1]    $CO_3^{2-} + 2H^+ \longleftrightarrow HCO_3^- + H^+ \longleftrightarrow H_2CO_3 \longleftrightarrow CO_2 + H_2O \; H^+ + OH^- \longrightarrow H_2O$

[Reaction Formula 2]    $CO_3^{2-} + H_2O \longleftrightarrow HCO_3^- + OH^-$

The filtrate, for example, may be added in an amount that includes 0.2 to 0.8 mol, preferably 0.3 to 0.7 mol, more preferably 0.4 to 0.6 mol of lithium from the filtrate, per 1 mol of lithium in the leachate. Within this range, since the pH of the leachate is increased, polyvalent cations such as Fe, Al, Ni, Co, or Mn are precipitated and easily removed, and the purity and recovery rate of lithium may be increased.

In the impurity removal step (b'), the leachate to which an impurity remover has been added may have, for example, a pH of 3 or higher, preferably a pH of 4 or higher, more preferably a pH of 5 or higher, still more preferably a pH of 6 or higher, still more preferably a pH of 6 to 9, still more preferably a pH of 6 to 8. Within this range, since impurities are precipitated and easily removed, the purity and recovery rate of lithium may be improved.

<u>(c) Purifying a lithium component by introducing the obtained leachate into a flow capacitive deionization apparatus</u>

The method of recovering lithium according to the present invention may include step (c) of obtaining a lithium concentrate by purifying a lithium component from the obtained leachate through a flow capacitive deionization apparatus. In this case, compared to a conventional process, the lithium component may be efficiently purified through a simple and continuous process, processing cost and energy are reduced, and the purity and yield of lithium may be increased.

In step (c), for example, the leachate introduced into the flow capacitive deionization apparatus may have a total content of metal components, excluding lithium, of 1 % by weight or less, preferably 0.01 to 1 % by weight. Within this range, the purity and yield of recovered lithium may be increased.

In the present disclosure, the content of lithium or metal components may be measured by a measurement method conventionally used in the technical field to which the present invention pertains, and specifically, may be measured through ICP analysis. As a specific measurement example, a 0.2 g aliquot of the leachate is taken, placed in a conical tube, and the exact weight thereof is measured. Then, 0.1 ml of 70 % by weight nitric acid is added thereto, followed by the addition of 500 $\mu$l of a 1000 mg/kg internal standard (Sc). The mixture is then diluted with ultrapure water to a volume of 50 ml and measured by ICP analysis. When necessary, the mixture may be further diluted with ultrapure water so that the sample concentration falls within the standard material calibration curve.

For example, in step (c), the flow capacitive deionization apparatus may include a lithium leachate circulation tank; an anion adsorber including a negative membrane flow electrode circulation tank, a current collector, and an anion exchange membrane; a cation adsorber including a cation exchange membrane, a current collector, and a positive membrane flow electrode circulation tank; a cation desorber including a current collector and a cation exchange membrane; and a cation collector including a deionized water circulation tank, an anion exchange membrane, a current collector, and a negative membrane flow electrode circulation tank. In this case, by using the principle of electrochemical ion adsorption and desorption, lithium may be obtained with high purity and a high recovery rate through a simple and continuous process compared to conventional processes, which provides the advantage of reduced processing cost and energy.

The flow capacitive deionization apparatus may preferably include two or more of each of an anion adsorber, a cation adsorber, and a cation desorber. In this case, there is an advantage in that productivity is further improved.

For example, in the flow capacitive deionization apparatus, a lithium leachate circulation tank, a negative membrane flow electrode circulation tank in the anion adsorber, a positive membrane flow electrode circulation tank, a negative membrane flow electrode circulation tank in the cation collector, and a deionized water circulation tank may each be connected to a pump to circulate individually, and ions may be separated by a current and/or voltage applied to the current collector. The flow rate of the pump and the applied current and/or voltage may be adjusted according to factors such as the size of the current collector, the performance of the cation and anion exchange membranes, and the capacities of the flow electrode and the lithium leachate.

The positive membrane flow electrode circulation tank, for example, may be shared by the positive membrane flow electrode on which lithium cations are adsorbed in the cation adsorber and the positive membrane flow electrode on which lithium cations are adsorbed in the cation desorber. In this case, there is an advantage in that a continuous process is possible, thereby improving productivity.

The pump may preferably be a metering pump.

The cation exchange membrane, for example, may include one or more selected from the group consisting of -$SO_3^-$, -COOH, -$PO_3^{2-}$, and -$PO_3H^-$, preferably -$SO_3^-$ as a fixed charge or functional group. In this case, a high-purity lithium component may be obtained by allowing lithium cations to easily pass through and attach to or detach from the positive membrane flow electrode.

In the present disclosure, the cation exchange membrane is also referred to as a positive membrane.

For example, the anion exchange membrane may include one or more selected from the group consisting of $NH_3^+$, $-NRH_2^+$, $-NR_2H^+$, and $-NR_3^+$, preferably $-NH_3^+$ as fixed charge or functional group. In this case, there is an effect of increasing the purity of lithium by allowing anion impurities in the leachate to easily pass through and attach to the negative membrane flow electrode.

In the present disclosure, the anion exchange membrane is also referred to as a negative membrane.

The current collector, for example, may include one or more selected from the group consisting of graphite, stainless steel (SUS), nickel, copper, and platinum, preferably graphite. In this case, there is an effect of allowing the flow electrode to move easily.

The lithium leachate circulation tank, the negative membrane flow electrode circulation tank in the anion adsorber, the positive membrane flow electrode circulation tank in the cation adsorber, the deionized water circulation tank, and the negative membrane flow electrode tank in the cation collector may preferably be tanks in an electrically insulated state. In this case, there is an advantage in that cations or anions may be recirculated without adhering to the inside of the tank.

For example, in step (c), the flow capacitive deionization apparatus may include a step of adsorbing lithium cations onto a positive membrane flow electrode by passing a leachate, in which a lithium component is dissolved, between an anion adsorber including a negative membrane flow electrode and a cation adsorber including the positive membrane flow electrode; a step of desorbing the lithium cations from the positive membrane flow electrode by passing the positive membrane flow electrode, on which the lithium cations are adsorbed, between a current collector and a cation exchange membrane; and a step of collecting the desorbed lithium cations with deionized water. In this case, by purifying and concentrating the lithium component using the principle of electrochemical ion adsorption and desorption, lithium may be recovered with high purity. Additionally, compared to conventional methods, the process may be simple, allows for continuous operation, and may be efficient, which provides the advantage of reduced processing cost and energy.

For example, in the flow capacitive deionization apparatus, after a step of adsorbing lithium cations from a lithium leachate onto a positive membrane flow electrode is performed using a single module consisting of a lithium leachate circulation tank; an anion adsorber including a negative membrane flow electrode circulation tank, a current collector, and an anion exchange membrane; and a cation adsorber including a cation exchange membrane, a current collector, and a positive membrane flow electrode circulation tank, in the module, by using the cation adsorber as a cation desorber and the anion adsorber as a cation collector, lithium may be desorbed and recovered from the positive membrane flow electrode on which lithium cations are adsorbed. In this case, equipment costs may be reduced.

Specifically, in the step of adsorbing lithium cations from the leachate, when the leachate is passed between an anion adsorber including a negative membrane flow electrode and a cation adsorber including a positive membrane flow electrode, the lithium cations in the leachate, by a negatively charged current collector, pass through the cation exchange membrane and are adsorbed onto the positive membrane flow electrode. The positive membrane flow electrode moves together with the adsorbed cations to the positive membrane flow electrode circulation tank, where the lithium cations are collected. Afterward, the positive membrane flow electrode circulates to repeat the step of adsorbing lithium cations onto the positive membrane flow electrode. Simultaneously, anions in the leachate, by a positively charged current collector, pass through the anion exchange membrane and are adsorbed onto the negative membrane flow electrode. The negative membrane flow electrode moves together with the adsorbed anions to the negative membrane flow electrode circulation tank, where the anions are collected. Afterward, the negative membrane flow electrode circulates again to repeat the step of adsorbing anions onto the negative membrane flow electrode. In this case, lithium cations and anions such as $F^-$, $PO_4^{3-}$, $SO_4^{2-}$, and $Cl^-$ in the leachate are easily separated and collected in the positive membrane flow electrode circulation tank and the negative membrane flow electrode circulation tank, respectively, which has the effect that high-purity lithium may be recovered.

For example, anions such as $F^-$, $PO_4^{3-}$, $SO_4^{2-}$, and $Cl^-$ are collected in the negative membrane flow electrode circulation tank, which provides the advantage of improving the purity of lithium.

In the step of adsorbing lithium cations from the leachate, for example, a spacer may be placed between the anion separator and the cation separator. In this case, there is an effect in that lithium cations and anions from the leachate are sufficiently adsorbed onto the positive membrane flow electrode and the negative membrane flow electrode, respectively.

In the present disclosure, a module is not particularly limited as long as the module is a module generally used in the technical field to which the present invention pertains, and for example, the module may mean a configuration designed to be independently installed, replaced, and/or used within a process, apparatus, or system.

Specifically, in the step of desorbing lithium cations from the positive membrane flow electrode on which lithium cations are adsorbed, when the positive membrane flow electrode, on which lithium cations are adsorbed, is passed between a positively (+) charged current collector and a cation exchange membrane, the lithium cations are desorbed from the positive membrane flow electrode and pass through the cation exchange membrane. This has the effect that the lithium component is purified and filtered, and high-purity lithium is recovered.

In the step of desorbing lithium cations from the positive membrane flow electrode on which lithium cations are adsorbed, for example, a spacer may be placed between the cation separator and the anion separator. In this case, there is an effect that lithium cations are sufficiently desorbed from the positive membrane flow electrode, such that high-purity lithium may be recovered.

The spacer is not particularly limited as long as the spacer is a spacer that is defined or used in the technical field to which the present invention pertains.

For example, in the step of collecting the desorbed lithium cations with deionized water, there is an effect that the lithium component is simultaneously purified and filtered and high-purity lithium is recovered by repeating a step in which the desorbed lithium cations combine with anions that have passed through the anion exchange membrane and are collected together with deionized water in the deionized water circulation tank.

Specifically, in the step of collecting the desorbed lithium cations with deionized water, there is an effect that the lithium component is simultaneously purified and filtered and high-purity lithium is recovered by repeating a step in which the desorbed lithium cations combine with anions that have passed through an anion exchange membrane (as a negative membrane flow electrode in the cation collector passes between the anion exchange membrane and a negatively (-) charged current collector) and are collected together with deionized water in the deionized water circulation tank.

More specifically, in the step of collecting the desorbed lithium cations with deionized water, when the negative membrane flow electrode in the cation collector includes deionized water, distilled water, or a mixture thereof as a solvent, there is an effect that the lithium component is simultaneously purified and filtered and high-purity lithium is recovered by repeating a step in which the desorbed lithium cations combine with $OH^-$ that has passed through an anion exchange membrane (as the negative membrane flow electrode in the cation collector passes between the anion exchange membrane and a negatively (-) charged current collector) and are collected in the form of LiOH together with deionized water in the deionized water circulation tank.

In addition, the negative membrane flow electrode that does not pass through the anion exchange membrane is recovered into the negative membrane flow electrode circulation tank in the cation collector and is recirculated.

The flow capacitive deionization apparatus, for example, may further include an adsorption negative membrane flow electrode regenerator. In this case, there is an advantage of continuously operating the process without replacing the negative membrane flow electrode on which anions are adsorbed.

The adsorption negative membrane flow electrode regenerator, for example, may include a negatively (-) charged current collector, an anion exchange membrane, a cation exchange membrane, and a positively (+) charged current collector. In this case, there is an advantage in that a continuous process is possible by desorbing anions from the negative membrane flow electrode (on which anions were adsorbed in the anion adsorber) and collecting the anions with deionized water.

The step of desorbing anions from the negative membrane flow electrode on which anions are adsorbed, for example, may include a step of passing the negative membrane flow electrode (on which anions are adsorbed and which is collected in the negative membrane flow electrode circulation tank in the anion adsorber) between a negatively (-) charged current collector and an anion exchange membrane to desorb the anions from the negative membrane flow electrode, and collecting the desorbed anions with deionized water and cations that have passed through the cation exchange membrane as the anions are separated while passing between a positively (+) charged current collector and the cation exchange membrane. In this case, by desorbing anions such as $F^-$, $PO_4^{3-}$, $SO_4^{2-}$, and $Cl^-$ from the negative membrane flow electrode, the negative membrane flow electrode in the anion adsorber may be used continuously without replacement, providing an excellent productivity effect.

Specifically, the step of desorbing anions from the negative membrane flow electrode on which anions are adsorbed may include a step of passing the negative membrane flow electrode (on which anions are adsorbed and which is collected in the negative membrane flow electrode circulation tank in the anion adsorber) between a negatively (-) charged current collector and an anion exchange membrane to desorb the anions from the negative membrane flow electrode, and collecting the desorbed anions with deionized water that passes between the anion exchange membrane and the cation exchange membrane, and with $H^+$ that has passed through the cation exchange membrane as the deionized water circulates between a positively (+) charged current collector and the cation exchange membrane. In this case, the desorbed anions such as $F^-$, $PO_4^{3-}$, $SO_4^{2-}$, and $Cl^-$ combine with $H^+$ and are collected with deionized water in the form of $H_2SO_4$, HF, HCl, $H_3PO_4$, etc., so that the negative membrane flow electrode in the anion adsorber may be used continuously without replacement, providing an excellent productivity effect.

For example, the positive membrane flow electrode or the negative membrane flow electrode may include an active material, a conductive additive, and a solvent. In this case, there is an advantage of easily separating lithium cations and anions (which are impurities) and collecting the lithium cations with high purity.

The active material, for example, may be one or more selected from the group consisting of activated carbon, carbon beads, mesoporous carbon, carbon nanotubes, graphene, and $MnO_2$. In this case, since the adsorption and desorption of the lithium component are easy, the purity and recovery rate of the recovered lithium may be increased.

For example, the conductive additive may include one or more selected from the group consisting of carbon black, carbon nanotubes, graphene, and reduced graphene oxide (rGO), and may not be identical to the active material. In this case, since the adsorption and desorption of the lithium component are easy, the purity and recovery rate of recovered lithium may be increased.

For example, the solvent may be sodium chloride (NaCl) solution, deionized water, or distilled water. In this case, since the adsorption and desorption of the lithium component are easy, the purity and recovery rate of recovered lithium may be increased.

The sodium chloride solution may be preferably an aqueous sodium chloride solution.

The active material and the conductive additive, for example, may be in a slurry state mixed in the solvent. In this case, there are effects in that the movement of the flow electrode is smooth, and the charge capacity and ion selectivity are increased.

For example, the active material, the conductive additive, and the solvent within the positive membrane flow electrode and the negative membrane flow electrode may be the same as or different from each other, respectively.

(d) Obtaining the purified lithium component as a lithium crystal salt

The method of recovering lithium according to the present invention includes step (d) of obtaining the purified lithium component as a lithium crystal salt. In this case, the energy, cost, and time required to purify and concentrate lithium to recover the lithium as powder may be greatly reduced.

For example, the lithium crystal salt may include one or more selected from the group consisting of lithium hydroxide (LiOH), lithium carbonate ($Li_2CO_3$), lithium chloride (LiCl), lithium sulfate ($Li_2SO_4$) and lithium nitrate ($LiNO_3$), preferably lithium hydroxide (LiOH) or lithium carbonate ($Li_2CO_3$). In this case, the energy, cost, and time required for lithium recovery may be significantly reduced.

In the present disclosure, the step of obtaining the purified lithium component as a lithium crystal salt may be performed using a method commonly used in the technical field to which the present invention belongs. For example, a lithium component may be carbonated to change the lithium component into lithium carbonate to obtain a lithium crystal salt. In this case, the energy, cost, and time required to purify and concentrate lithium to recover the lithium as powder may be greatly reduced.

For example, the carbonation may be performed by adding a carbonate or a carbonic acid gas. In this case, the energy, cost, and time required for purification and concentration to recover lithium are reduced by converting the lithium component to lithium carbonate and recovering lithium with a high yield.

For example, the carbonate may be include one or more selected from the group consisting of sodium carbonate, ammonium carbonate, and potassium carbonate, preferably sodium carbonate. In this case, the energy, cost, and time required for purification and concentration to recover lithium are reduced by converting the lithium component to lithium carbonate and recovering lithium with a high yield.

For example, the carbonate may be added in an amount of 0.8 to 1.5 mol, preferably 0.9 to 1.3 mol, more preferably 1.0 to 1.2 mol, per 1 mol of the lithium component. Within this range, there is an advantage of excellent conversion to lithium carbonate.

For example, the carbonic acid gas may be carbon dioxide. In this case, the energy, cost, and time required for purification and concentration to recover lithium are reduced by converting the lithium component to lithium carbonate and recovering lithium with a high yield.

For example, the carbonic acid gas may be added in an amount equal to or greater than the amount that may carbonate the lithium component obtained after purifying the leachate in step (c) through the flow capacitive deionization apparatus. In this case, there is an advantage of recovering lithium with high purity.

The process may, for example, include a step of heating the lithium component after the carbonation.

For example, the heating temperature may be 65 to 95 °C, preferably 70 to 90 °C, more preferably 75 to 85 °C. Within this range, there is an advantage of easily recovering the lithium component in the form of lithium carbonate.

For example, the heating time may be 40 to 80 minutes, preferably 45 to 75 minutes, more preferably 50 to 70 minutes. Within this range, there is an advantage of easily recovering the lithium component in the form of lithium carbonate.

As a specific example of the carbonation process, the purified lithium component exists as a concentrate of LiOH and $Li_2CO_3$. When carbon dioxide ($CO_2$) or $Na_2CO_3$ is added thereto for carbonation, LiOH and $Li_2CO_3$ become $Li_3CO_3$ and $LiHCO_3$. When $Li_3CO_3$ and $LiHCO_3$ are heated, an $Li_2CO_3$ solution and a crystal salt in the form of $Li_2CO_3$ are obtained. Lithium is recovered from this as a crystal salt in the form of $Li_2CO_3$ through solid-liquid separation. In this case, there is an advantage in that energy, cost, and time are greatly reduced compared to a conventional heating or vacuum evaporation crystallization process for recovering the lithium component as a powder.

For example, in step (d), after the purified lithium component is obtained as a lithium crystal salt, the remaining filtrate may be circulated to the flow capacitive deionization apparatus of step (c) and reused. In this case, there is an effect that lithium remaining in the filtrate is purified, thereby maximizing the recovery rate of lithium.

In addition, for example, in step (d), after the purified lithium component is obtained as a lithium crystal salt, the remaining filtrate may be introduced into the impurity removal step (b'). In this case, the pH of the leachate may be increased by the lithium component remaining in the filtrate, thereby precipitating and easily removing polyvalent cations, and processing costs may be reduced.

For example, the lithium crystal salt obtained in step (d) may have a lithium purity of 99 % by weight or more, preferably 99.5 % by weight or more. In this case, there is an advantage of recovering high-purity lithium.

In the present disclosure, the purity of lithium is defined or calculated as in Equation 1 below, and may be measured by a measurement method conventionally used in the technical field to which the present invention pertains. As a specific example, the purity of lithium may be measured through ICP analysis. For a specific measurement example, a 0.1 g sample is taken, placed in a conical tube, and the exact weight thereof is measured. Then, 1.0 ml of 70 % by weight nitric acid is added, and the mixture is diluted with ultrapure water to a volume of 10 ml to measure the content of Li, Ni, Co, Mn, Fe, P, and Al through ICP-OES analysis. When necessary, the sample is further diluted with ultrapure water so that the sample concentration falls within the standard material calibration curve to measure the content (ppm) of Li, Ni, Co, Mn, Fe, P, and Al.

In the present disclosure, % and ppm are based on weight unless otherwise defined.

Purity of lithium (wt%) = 100 wt% - Total sum of components excluding lithium (wt%)      [Equation 1]

In addition, the apparatus for recovering lithium of the present invention may include a lithium leachate circulation tank; an anion adsorber including a negative membrane flow electrode circulation tank, a current collector, and an anion exchange membrane; a cation adsorber including a cation exchange membrane, a current collector, and a positive membrane flow electrode circulation tank; a cation desorber including a current collector and a cation exchange membrane; and a cation collector including a deionized water circulation tank, an anion exchange membrane, a current collector, and a negative membrane flow electrode circulation tank. Here, the lithium cations included in the lithium leachate pass through the cation exchange membrane of the adsorber and move to the positive membrane flow electrode circulation tank, and then pass through the cation exchange membrane of the desorber to be collected in the deionized water circulation tank of the collector. In this case, the lithium component from the leachate may be easily purified through an adsorption and desorption process, and since the process is simple and a continuous process is possible, processing cost and energy may be reduced.

In addition, the method of recovering lithium according to the present invention may include step (a) of obtaining cathode material powder by crushing and/or pulverizing a lithium-ion battery cathode; step (a') of obtaining a heat-treated cathode material powder by heat-treating the obtained cathode material powder with a carbon-containing reducing agent to obtain a heat-treated product, and crushing the obtained heat-treated product; step (b) of obtaining the leachate in which a lithium component is dissolved by adding the heat-treated cathode material powder to water; step (c) of purifying the lithium component from the obtained leachate through a flow capacitive deionization apparatus; and step (d) of obtaining the purified lithium component as a lithium crystal salt. In this case, through flow capacitive deionization, which is an electrochemical adsorption and desorption process, impurities, particularly anion impurities, may be easily removed, whereby high-purity lithium may be recovered. In addition, the lithium recovery rate may be maximized through the recirculation of a filtrate remaining after obtaining the purified lithium component as a lithium crystal salt or a lithium-containing waste liquid. In addition, the process may be simplified and energy may be saved, and an eco-friendly benefit may be obtained by reducing an amount of wastewater generated.

For example, the cathode material may include one or more selected from the group consisting of lithium cobalt oxide; lithium manganese oxide; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co), preferably an NCM-based lithium composite transition metal oxide in which a portion of nickel (Ni) in the lithium nickel oxide is substituted with manganese (Mn) and cobalt (Co). In this case, since an acidic solution is not used, the generation of wastewater is reduced. Additionally, due to the high selectivity for lithium, an impurity removal process to remove polyvalent cations such as Fe, Al, Ni, Co, or Mn is not necessary, which provides the advantage that the process is simplified.

In addition, the method of recovering lithium according to the present invention may include, for example, step (a) of obtaining cathode material powder by crushing and/or pulverizing a lithium-ion battery cathode; step (b) of obtaining a leachate by adding the obtained cathode material powder to a mixture of an acidic solution and an oxidizing agent, leaching the mixture to obtain a lithium-dissolved leachate and a leaching residue, and separating the leachate and the leaching residue; step (b') of obtaining a filtered leachate by filtering the obtained leachate with a nanofiltration membrane; step (c) of purifying the lithium component from the obtained filtered leachate through a flow capacitive deionization apparatus; and step (d) of obtaining the purified lithium component as a lithium crystal salt.

In the method of recovering lithium, for example, in step (d), a filtrate remaining after obtaining the purified lithium component as a lithium crystal salt may be introduced into the flow capacitive deionization apparatus of step (c) to be reused.

For example, the cathode material may include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co), preferably an NCM-based lithium composite transition metal oxide in which a portion of nickel (Ni) in the lithium nickel oxide is substituted with manganese (Mn) and cobalt (Co), a lithium iron phosphate compound, or a mixture thereof. In this case, as polyvalent cations such as Fe, Al, Ni, Co, or Mn included in the leachate are removed by filtration with a nanofiltration membrane, there is an effect that high-purity lithium may be recovered.

In addition, the method of recovering lithium according to the present invention may include, for example, step (a) of obtaining cathode material powder by crushing and/or pulverizing a lithium-ion battery cathode; step (b) of obtaining a leachate by dissolving the obtained cathode material powder in an acidic solution to obtain a solution, adding an oxidizing agent to the solution, leaching the solution to obtain a lithium-dissolved leachate and a leaching residue, and separating the lithium-dissolved leachate and the leaching residue; step (b') of obtaining the filtered leachate by filtering the obtained leachate with a nanofiltration membrane; step (c) of purifying a lithium component from the obtained filtered leachate through a flow capacitive deionization apparatus; and step (d) of obtaining the purified lithium component as a lithium crystal salt.

For example, in the method of recovering lithium, in step (d), a filtrate remaining after obtaining the purified lithium component as a lithium crystal salt may be introduced into the flow capacitive deionization apparatus of step (c) to be reused.

In addition, the method of recovering lithium according to the present invention may include, for example, step (a) of obtaining cathode material powder by crushing and/or pulverizing a lithium-ion battery cathode; step (b) of obtaining a leachate by adding the obtained cathode material powder to a mixture of an acidic solution and an oxidizing agent, leaching the mixture to obtain a lithium-dissolved leachate and a leaching residue, and separating the lithium-dissolved leachate and the leaching residue; step (b') of removing impurities by adding an impurity remover to the obtained leachate; step (c) of purifying a lithium component from the leachate, from which the impurities have been removed, through a flow capacitive deionization apparatus; and step (d) of obtaining the purified lithium component as a lithium crystal salt, and the impurity remover may be lithium hydroxide (LiOH) or a basic compound.

For example, in the method of recovering lithium, in step (d), a filtrate remaining after obtaining the purified lithium component as a lithium crystal salt may be introduced into the flow capacitive deionization apparatus of step (c) to be reused.

In step (b), as another example, a leachate may be obtained by dissolving the obtained cathode material powder in an acidic solution to obtain a solution, adding an oxidizing agent to the solution, leaching the solution to obtain a lithium-dissolved leachate and a leaching residue, and separating the lithium-dissolved leachate and the leaching residue.

For example, the cathode material may include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co), preferably an NCM-based lithium composite transition metal oxide in which a portion of nickel (Ni) in the lithium nickel oxide is substituted with manganese (Mn) and cobalt (Co), a lithium iron phosphate compound, or a mixture thereof. In this case, by adding lithium hydroxide (LiOH) or a basic compound to the leachate to increase the pH of the leachate, thereby precipitating and removing polyvalent cations such as Fe, Al, Ni, Co, or Mn, and high-purity lithium may be recovered.

In addition, the method of recovering lithium according to the present invention may include, for example, step (a) of obtaining cathode material powder by crushing and/or pulverizing a lithium-ion battery cathode; step (b) of obtaining a leachate by adding the obtained cathode material powder to a mixture of an acidic solution and an oxidizing agent, leaching the mixture to obtain a lithium-dissolved leachate and a leaching residue, and separating the lithium-dissolved leachate and the leaching residue; step (b') of precipitating and removing impurities by adding an impurity remover to the obtained leachate; step (c) of purifying a lithium component from the leachate, from which the impurities have been removed, through a flow capacitive deionization apparatus; and step (d) of obtaining the purified lithium component as a lithium crystal salt. In step (d), the impurity remover may be a filtrate remaining after obtaining the purified lithium component as a lithium crystal salt.

In step (b), as another example, a leachate may be obtained by dissolving the obtained cathode material powder in an acidic solution to obtain a solution, adding an oxidizing agent to the solution, leaching the solution to obtain a lithium-dissolved leachate and a leaching residue, and separating the lithium-dissolved leachate and the leaching residue.

For example, the cathode material may include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co), preferably an NCM-based lithium composite transition metal oxide in which a portion of nickel (Ni) in the lithium nickel oxide is substituted with manganese (Mn) and cobalt (Co), a lithium iron phosphate compound, or a mixture thereof. In this case, by recovering the remaining filtrate after converting a lithium concentrate to a lithium crystal salt and adding the filtrate to the leachate, the pH of the leachate is increased, whereby polyvalent ions such as $F^-$, $PO_4^{3-}$, $SO_4^{2-}$, and $Cl^-$ are precipitated, such that impurities are easily removed and high-purity lithium may be recovered.

In addition, the method of recovering lithium according to the present invention may include, for example, step (a) of obtaining cathode material powder by crushing and/or pulverizing a lithium-ion battery cathode; step (b) of obtaining a leachate by adding the obtained cathode material powder to a mixture of an acidic solution and an oxidizing agent, leaching the mixture to obtain a lithium-dissolved leachate and a leaching residue, and separating the lithium-dissolved leachate and the leaching residue; step (b') of precipitating and removing impurities by adding an impurity remover to the obtained leachate; step (c) of purifying a lithium component from the leachate, from which the impurities have been removed, through a flow capacitive deionization apparatus; and step (d) of obtaining the purified lithium component as a lithium crystal salt, and the impurity remover may be cathode material powder.

In step (b'), the cathode material powder, which is an impurity remover, may be cathode material powder obtained by crushing and/or pulverizing a lithium-ion battery cathode.

For example, in the method of recovering lithium, in step (d), a filtrate remaining after obtaining the purified lithium component as a lithium crystal salt may be introduced into the flow capacitive deionization apparatus of step (c) to be reused.

In step (b), as another example, a leachate may be obtained by dissolving the obtained cathode material powder in an acidic solution to obtain a solution, adding an oxidizing agent to the solution, leaching the solution to obtain a lithium-dissolved leachate and a leaching residue, and separating the lithium-dissolved leachate and the leaching residue.

For example, the cathode material may include one or more selected from the group consisting of lithium cobalt oxide; lithium manganese oxide; a lithium iron phosphate compound; lithium nickel cobalt aluminum oxide; lithium nickel oxide; a nickel-manganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co), preferably an NCM-based lithium composite transition metal oxide in which a portion of nickel (Ni) in the lithium nickel oxide is substituted with manganese (Mn) and cobalt (Co), a lithium iron phosphate compound, or a mixture thereof. In this case, when a cathode material powder obtained by crushing and/or pulverizing a lithium-ion battery cathode is added to the leachate, the pH of the leachate is increased due to the large amount of lithium in the cathode material powder. As a result, polyvalent ions such as $F^-$, $PO_4^{3-}$, $SO_4^{2-}$, and $Cl^-$ are removed by precipitation, so that high-purity lithium may be recovered.

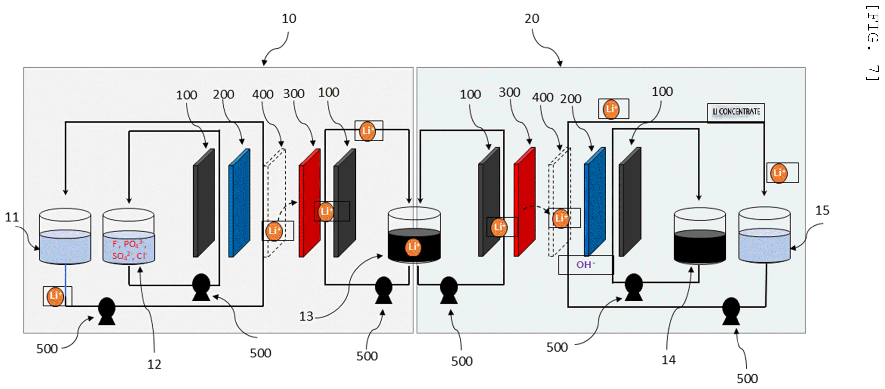

FIG. 7 below is a diagram schematically illustrating a process for purifying a lithium component from the leachate in which a lithium component is dissolved by introducing the leachate into a flow capacitive deionization (FCDI) apparatus including an anion adsorber, a cation adsorber, a cation desorber, and a cation collector, according to one embodiment of the present invention.

Specifically, FIG. 7 below shows a process in which one module including an anion adsorber and a cation adsorber, and one module including a cation desorber and a cation collector (that is, two modules), are connected to continuously perform the process of purifying the lithium component from the leachate in which a lithium component is dissolved. In this case, productivity may be improved.

More specifically, the flow capacitive deionization (FCDI) apparatus includes a lithium leachate circulation tank 11; an anion adsorber including a negative membrane flow electrode circulation tank 12, a current collector 100, and an anion exchange membrane 200; a cation adsorber including a cation exchange membrane 300, a current collector 100, and a positive membrane flow electrode circulation tank 13; a cation desorber including the current collector 100 and the cation exchange membrane 300; and a cation collector including a deionized water circulation tank 15, the anion exchange membrane 200, the current collector 100, and the negative membrane flow electrode circulation tank 14. Here, the anion adsorber and cation adsorber are referred to as adsorbers 10, and the cation desorber and cation collector are referred to as desorbers 20.

In addition, FIG. 8 below is a diagram schematically illustrating a process according to one embodiment of the present invention, wherein after a process of adsorbing lithium cations onto a positive membrane flow electrode is performed by introducing a leachate, in which a lithium component is dissolved, into a flow capacitive deionization apparatus composed of a single module including an anion adsorber and a cation adsorber, a process of desorbing and recovering lithium from the positive membrane flow electrode, on which the lithium cations are adsorbed, is performed by using the cation adsorber as a cation desorber and the anion adsorber as a cation collector.

Specifically, the flow capacitive deionization apparatus consisting of one module includes the lithium leachate circulation tank 11; the anion adsorber including the negative membrane flow electrode circulation tank 12, the current collector 100, and the anion exchange membrane 200; and the cation adsorber including the cation exchange membrane 300, the current collector 100, and the positive membrane flow electrode circulation tank 13. After lithium cations are adsorbed onto the positive membrane flow electrode, the cation adsorber is used as a cation desorber, and the anion adsorber is used as a cation collector, to desorb and recover lithium from the positive membrane flow electrode on which the lithium cations are adsorbed. In this case, apparatus cost and space may be saved.

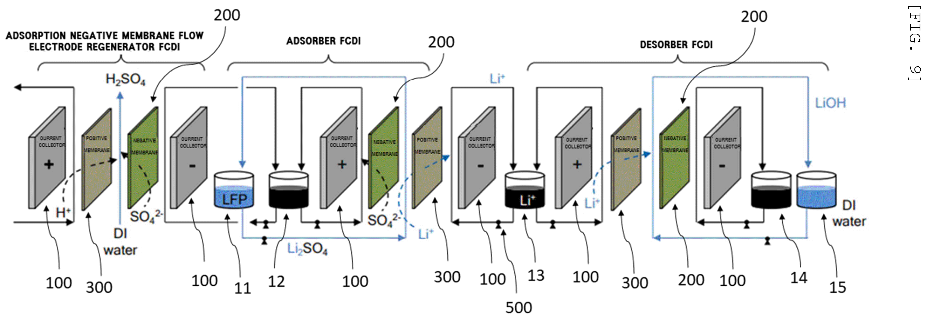

In addition, FIG. 9 is a schematic diagram of a process in which an adsorption negative membrane flow electrode regenerator is added to a process of purifying a lithium component by introducing the leachate in which a lithium component is dissolved into a flow capacitive deionization apparatus including an anion adsorber, a cation adsorber, a cation desorber, and a cation collector, as one embodiment according to the present invention.

Specifically, the adsorption negative membrane flow electrode regenerator may include the current collector 100, the cation exchange membrane 300, the anion exchange membrane 200, and the current collector 100. In this case, the process may be operated continuously without replacing the anion-adsorbed negative membrane flow electrode.

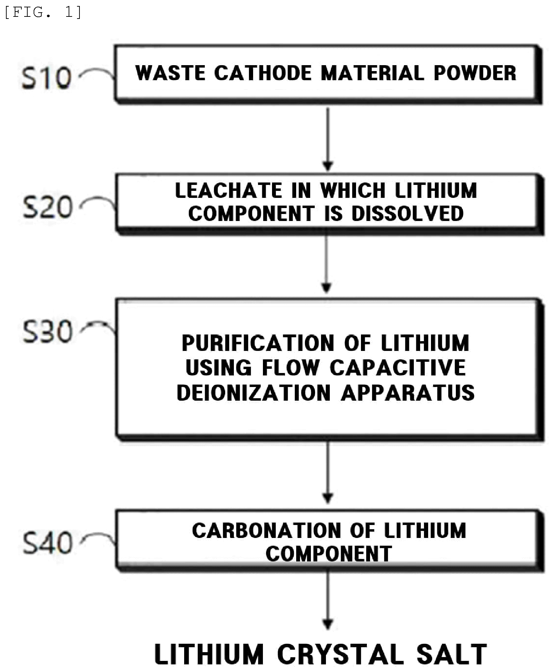

Referring to FIG. 1, first, the lithium-ion battery cathode is crushed and/or pulverized to prepare cathode material powder (step S10).

Next, a leaching solvent is added to the cathode material powder to obtain a leachate in which a lithium component is dissolved and a leaching residue, and the leachate is obtained by separating the leachate and the leaching residue (step S20).

Next, the obtained leachate is introduced into a flow capacitive deionization apparatus to purify a lithium component (step S30).

Next, the purified lithium component is obtained as a lithium crystal salt (step S40).

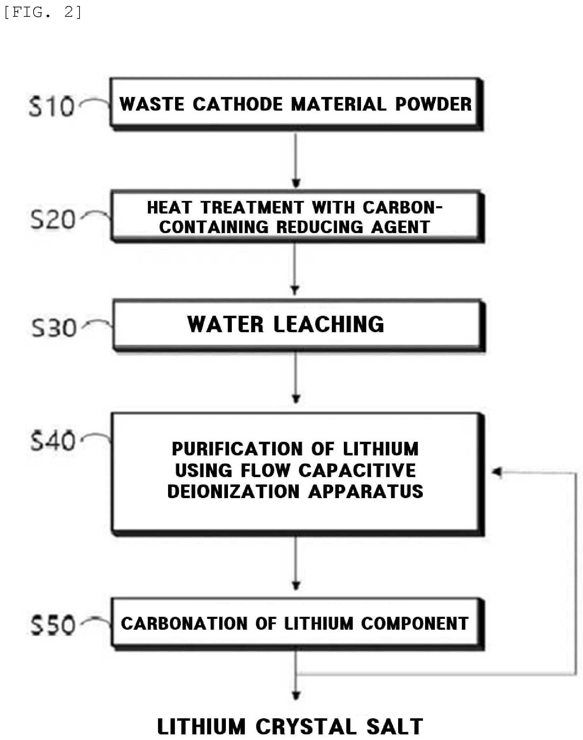

Hereinafter, the method of recovering lithium will be described in detail step by step with reference to FIGS. 2 to 6.

Referring to FIG. 2, first, cathode material powder is prepared by crushing and/or pulverizing a lithium-ion battery cathode (step S10).

The waste lithium-ion battery cathode may preferably be a discarded lithium-ion battery cathode, a defective product generated during a cathode coating process, or a cathode scrap discarded after cutting an electrode plate, more preferably a discarded lithium-ion battery cathode.

The cathode has a structure in which a cathode active material layer including a cathode active material and a conductive material is bonded on aluminum foil by a binder.

The cathode active material may be an NCM-based lithium composite transition metal oxide.

First, to prepare the cathode material powder, the cathode of a waste lithium-ion battery is crushed and pulverized to an appropriate size.

Here, the crushing involves cutting or shredding the cathode into easy-to-handle sizes. As a specific example, the crushed cathode may have a size of 1 cm × 1 cm. For example, the crushing may be performed using various dry crushing equipment such as a hand-mill, a pin-mill, a disc-mill, a cutting-mill, a hammer-mill, or a shredder. In addition, to increase productivity, the crushing may be performed using a high-speed cutter.

Preferably, in consideration of equipment used in handling the cathode and subsequent processes, whether to perform the crushing, the size of pieces, and the like may be determined. For example, when equipment capable of continuous processing is used, since high fluidity is required, the cathode must be crushed into small pieces.

Thereafter, the crushed cathode is pulverized using a mixer, a hand-mill, a pin-mill, a disc-mill, a cutting-mill, or a hammer-mill. As a specific example, when pulverizing is performed using a mixer, current collector pieces are chopped and cathode material is separated from the current collector pieces.

The pulverized cathode material is sieved to obtain cathode material powder. The sieving, for example, may be performed with a 30 to 500 mesh sieve, as a specific example, a 325 mesh sieve.

Through the sieving, powder having a uniform size may be obtained, and current collector pieces may be separated.

Next, the cathode material powder is heat-treated with a carbon-containing reducing agent (step S20).

Here, a cathode material for lithium-ion batteries undergoes complex processes, such as calcination, addition of carbon and other metal oxides, and thermal fusion after binder addition, to maintain or enhance battery characteristics during preparation of the cathode material. For this reason, a cathode material of discarded lithium-ion batteries contains valuable metals and impurities in various oxide forms, which may act as obstacles in the recovery of lithium and valuable metals. Here, to remove such obstacles, the cathode material is mixed with carbon and heat-treated at a high temperature, thereby removing the binder added during the preparation of the cathode material and reducing metallic substances bonded with oxygen. This process is the heat treatment step.

The heat treatment includes adding a carbon-containing reducing agent to the obtained cathode material powder and heat-treating the mixture to obtain a heat-treated product.

The carbon-containing reducing agent, for example, may be a carbon-containing organic substance, a carbon-containing inorganic substance, an anode material, or a mixture thereof, and as a specific example, may be a graphite anode material. In this case, there is an advantage in that lithium may be dissolved from the cathode material powder using water instead of an acidic solution.

The carbon-containing reducing agent, for example, is used in an amount of 0.3 to 3 mol, and as a specific example, is used in an amount of 1 mol, based on 1 mol of the cathode active material in the cathode material powder. In this case, the cathode material is sufficiently reduced, so that a lithium component may be easily dissolved in a subsequent process.

The heat treatment, for example, may be performed under a reducing gas or an inert gas, may preferably be performed in an argon or nitrogen atmosphere, and as a specific example, may be performed in a nitrogen atmosphere. In this case, there is an advantage in that the cathode material is easily reduced. At this time, the flow rate of the nitrogen gas, for example, may be 1 to 20 L/min, and as a specific example, may be 10 L/min. Within this range, there is an advantage of a high conversion rate to a lithium compound.

The heat treatment, for example, may be performed at 550 to 750 °C, and as a specific example, may be performed at 630 °C. Within this range, there is an advantage in that the cathode material is sufficiently reduced.

For example, the rate of temperature increase for reaching the heat treatment temperature may be 1 to 20 °C/min, specifically 3 °C/min. Within this range, the heat treatment may be implemented without straining heat treatment equipment, and there is an advantage of not causing thermal shock to the cathode material.

The heat treatment, for example, may be performed for 0.5 to 5.5 hours, and as a specific example, may be performed for 5 hours. Within this range, there is an advantage in that the cathode material is sufficiently reduced.

The heat treatment, for example, may be performed at atmospheric pressure. In this case, there are advantages in that the process is safe and production costs are reduced.

The heat treatment may preferably use a rotary kiln. In this case, there are advantages in that continuous processing is possible, productivity is excellent, and the reduction reaction may be promoted, allowing for the recovery of high-purity lithium with a high yield.

After the heat treatment, for example, slow cooling or rapid cooling may be performed in the atmosphere.

By crushing the obtained heat-treated product to obtain a heat-treated cathode material powder, the specific surface area of the heat-treated product is increased, which provides the advantage that leaching with water is facilitated, allowing for the recovery of high-purity lithium with a high yield.

The cathode material powder crushed after the heat treatment, for example, may have a particle size of 0.5 to 100 $\mu$m, and as a specific example, may have a particle size of 10 to 15 $\mu$m. Within this range, there is an advantage in that lithium is easily leached, allowing for the recovery of high-purity lithium with a high yield.

In the present disclosure, the particle size may be measured by a measurement method conventionally used in the technical field to which the present invention pertains, and for example, may be measured using a laser diffraction method. Specifically, after dispersing the particles of the cathode active material in a dispersion medium, the particles are introduced into a commercially available laser diffraction particle size measurement apparatus such as a Microtrac S3500, an ultrasonic wave of about 28 kHz is applied at an output of 60 W, and the average particle size (D50) at the 50 % standard of the particle diameter distribution in the measurement apparatus may be calculated.

The crushing, for example, may use a milling machine, and specifically, may use a roll press. In this case, there is an advantage of uniformly crushing the crushed material.

The crushing, for example, may be dry crushing. In this case, there are advantages of uniformly crushing the crushed material and increasing the specific surface area.

Next, the heat-treated cathode material powder is leached with water to obtain the leachate in which a lithium component is dissolved and a leaching residue, and the leachate is obtained by separating the leachate and the leaching residue (step S30).

Here, by leaching the heat-treated cathode material powder with water, compared to leaching using an acid, the leachate contains fewer impurities such as Ni, Co, and Mn, allowing for the recovery of a high-purity lithium compound. Also, because an acid is not used, wastewater treatment is not necessary, which reduces production costs and provides an eco-friendly benefit.

The heat-treated cathode material powder and water may be mixed, for example, at a solid-to-liquid ratio of 1g/20mL to 1g/40mL, and as a specific example, may be mixed at 1g/30mL. Within this range, sufficient leaching of lithium from the heat-treated cathode material powder occurs, so that a leachate with a high concentration of the dissolved lithium component and reduced impurities may be obtained.

For example, the water may be distilled or deionized water, as a specific example, distilled water. In this case, impurities in the leachate may be reduced.

The leaching may be performed by adding water to the heat-treated cathode material powder and then stirring with a stirrer at room temperature.

The stirring, for example, may be performed at 300 to 700 rpm, and as a specific example, may be performed at 500 rpm. Within this range, there is an advantage of promoting the leaching of the lithium component from the heat-treated cathode material powder.

The stirring, for example, may be performed for 0.5 hours or more, as a specific example, for 1 hour. Within this range, there is an advantage in that the lithium component is sufficiently leached from the heat-treated cathode material powder, allowing lithium to be obtained with a high recovery rate.

The water, for example, may be neutral water, and as a specific example, may be distilled water. In this case, impurities in the leachate in which a lithium component is dissolved may be reduced, and since an acid is not used, an eco-friendly benefit may be obtained.

By leaching with water, a high-purity lithium compound may be easily recovered because the content of impurities such as Ni, Co, and Mn is low in the leachate in which a lithium component is dissolved.

The separation of the leachate and the leaching residue obtained by the leaching, for example, may use filtration, and as a specific example, may use reduced pressure filtration. In this case, the leachate and the leaching residue are easily separated through a simple process without using an acid, providing the advantages that processing costs may be reduced and an eco-friendly benefit is obtained.

Through the separation, the leachate in which a lithium component is dissolved is obtained.

Next, the obtained leachate is introduced into a flow capacitive deionization apparatus to purify a lithium component (step S40).

For example, the flow capacitive deionization apparatus includes a lithium leachate circulation tank; an anion adsorber including a negative membrane flow electrode circulation tank, a current collector, and an anion exchange membrane; a cation adsorber including a cation exchange membrane, a current collector, and a positive membrane flow electrode circulation tank; a cation desorber including a current collector and a cation exchange membrane; and a cation collector including a deionized water circulation tank, an anion exchange membrane, a current collector, and a negative membrane flow electrode circulation tank.

For example, step S40 of purifying the obtained leachate in a flow capacitive deionization apparatus may include a step of adsorbing lithium cations onto a positive membrane flow electrode by passing a leachate, in which a lithium component is dissolved, between an anion adsorber including a negative membrane flow electrode and a cation adsorber including the positive membrane flow electrode; a step of desorbing the lithium cations from the positive membrane flow electrode by passing the positive membrane flow electrode, on which the lithium cations are adsorbed, between a current collector and a cation exchange membrane; and a step of collecting the desorbed lithium cations with deionized water.

The lithium component purified through the flow capacitive deionization apparatus has a high purity and includes an extremely small amount of impurities.

Next, the purified lithium component is obtained as a lithium crystal salt (step S50).

The purified lithium component, for example, may exist in the form of a concentrate that includes the purified lithium component.

In the present disclosure, the step of obtaining the purified lithium component as a lithium crystal salt may use a method conventionally used in the technical field to which the present invention pertains. For example, lithium carbonate may be recovered by adding a carbonate or carbonic acid gas to the purified lithium component. Preferably, $Na_2CO_3$ or $CO_2$ may be added, and more preferably, the step may be performed by adding $CO_2$.

The concentrate including the purified lithium component, for example, may have a pH of 11 or higher. In this case, high-purity lithium may be recovered by easily carbonating lithium by adding $CO_2$.

For example, when carbonic acid gas, specifically $CO_2$, is added to the concentrate including the purified lithium component, lithium is ionized into the forms of $Li_2CO_3$ and $LiHCO_3$. Here, the $CO_2$ is added in an amount equal to or greater than the amount that may convert the LiOH in the lithium concentrate to $Li_2CO_3$. In this case, there is an advantage in that the lithium component is carbonated and recovered as lithium carbonate.

The lithium compound, ionized into the forms of $Li_2CO_3$ and $LiHCO_3$, is heated, for example, at 65 to 95 °C for 40 to 80 minutes (as a specific example, at 80 °C for 60 minutes), to obtain a precipitate in the form of $Li_2CO_3$ and a filtrate.

When the precipitation is complete, the precipitate in the form of $Li_2CO_3$ and the filtrate are separated by reduced pressure filtration. The filtrate includes a small amount of the lithium component and is made to recirculate by being introduced into the flow capacitive deionization apparatus of step S40.

The precipitate in the form of $Li_2CO_3$ is washed with water at, for example, 70 to 90 °C (as a specific example, 80 °C) and then dried to obtain the final $Li_2CO_3$ powder.

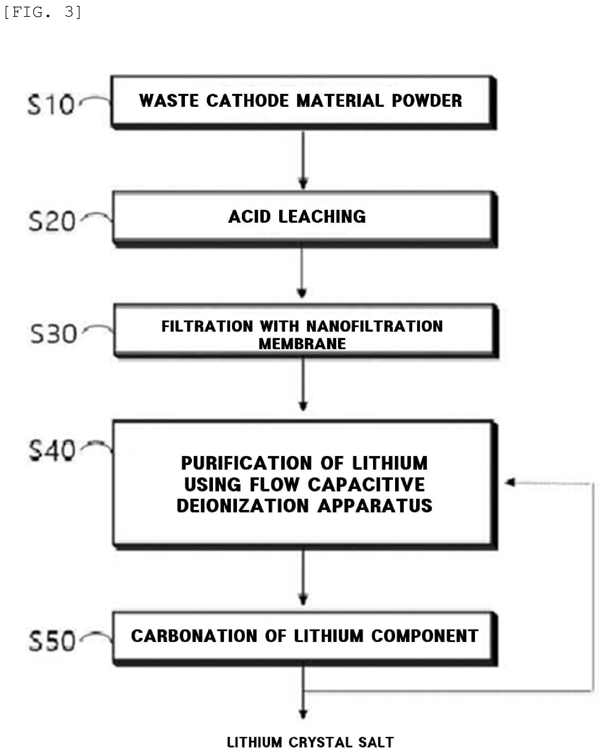

In addition, referring to FIG. 3, first, cathode material powder is prepared by crushing and pulverizing a lithium-ion battery cathode (step S10).

The cathode active material in the cathode material powder may be an NCM-based lithium composite transition metal oxide or a lithium iron phosphate compound.

Step S10 is the same as step S10 of FIG. 2 described above, so a description thereof is omitted here.

Next, a leachate is obtained from the obtained cathode material powder (step S20).

In step S20, the obtained cathode material powder is added to a mixture of an acidic solution and an oxidizing agent, and is leached to obtain a lithium-dissolved leachate and a leaching residue, and then the lithium-dissolved leachate and the leaching residue are separated to obtain the leachate.

The acidic solution, for example, may be a solution including one or more selected from the group consisting of sulfuric acid, hydrochloric acid, hypochlorous acid, nitric acid, carbonic acid, acetic acid, and oxalic acid; as a specific example, the acidic solution may be a solution including hydrochloric acid or sulfuric acid; and as one example, the acidic solution may be an aqueous hydrochloric acid solution or an aqueous sulfuric acid solution. In this case, the lithium component may be selectively leached.

For example, the acidic solution may contain an acid at a concentration of 0.1 to 1.5 mol/L, as a specific example, 0.6 to 1.0 mol/L. In this case, by using a lowconcentration acid, the generation of wastewater may be reduced, and the lithium component may be selectively leached.

The acidic solution may, for example, include an acid in an amount of 0.5 to 1.5 mol, as a specific example, 1.1 mol, per 1 mol of a cathode active material in the cathode material powder. In this case, all elements in the cathode material may be easily dissolved with a small amount of acid.

The oxidizing agent, for example, may be included in an amount of 0.5 to 2.3 mol, as a specific example, 2.1 mol, per 1 mol of a cathode active material in the cathode material powder. In this case, there is an advantage in that the lithium component in the cathode material powder is selectively dissolved, and metal components other than lithium are precipitated, allowing the metal components to be easily separated.

The oxidizing agent, for example, may include one or more selected from the group consisting of hydrogen peroxide, sodium persulfate, potassium persulfate, ammonium persulfate, oxygen, and air, and as a specific example, may be hydrogen peroxide. In this case, there is an advantage in that the lithium component in the cathode material powder is selectively dissolved, and metal components other than lithium are precipitated, allowing the metal components to be easily separated.

Step S20 may be performed, for example, at room temperature. In this case, there is an advantage in that lithium in the cathode material powder is dissolved, and metal components other than lithium are precipitated.

Step S20 may be performed under stirring, for example, at a stirring speed of 300 to 700 rpm, as a specific example, at 500 rpm. Within this range, there is an advantage in that lithium in the cathode material powder is dissolved, and metal components other than lithium are precipitated.

The stirring in step S20 may be performed for, for example, 0.5 hours or more, as a specific example, for 2 hours. Within this range, there is an advantage in that lithium in the cathode material powder is dissolved, and metal components other than lithium are precipitated.

For example, the separation of the lithium-dissolved leachate and the leaching residue may be performed by filtration, as a specific example, reduced pressure filtration, to obtain the leachate. In this case, leachate and leaching residue may be easily separated through a simple process, reducing processing costs and providing an eco-friendly benefit.

Next, the obtained leachate is filtered with a nanofiltration membrane (step S30).

Step S30 has the advantage of removing polyvalent cations such as Fe, Al, Ni, Co, or Mn in addition to lithium from the obtained leachate, allowing for recovery as high-purity lithium.

The nanofiltration membrane, for example, may have a molecular weight cutoff of 100 to 1,000 Da, preferably 200 to 700 Da, more preferably 200 to 500 Da. In this case, the purity of lithium may be further improved because polyvalent cations such as Fe, Al, Ni, Co or Mn are removed.

Next, the filtered leachate is introduced into a flow capacitive deionization apparatus to purify the lithium component (step S40).

Step S40 is the same as step S40 of FIG. 2 described above, so a description thereof is omitted here.

The lithium component purified through the flow capacitive deionization apparatus has a high purity and includes an extremely small amount of impurities.

Next, the purified lithium component is obtained as a lithium crystal salt (step S50).

Step S50 is the same as step S50 of FIG. 2 described above, so a description thereof is omitted here.

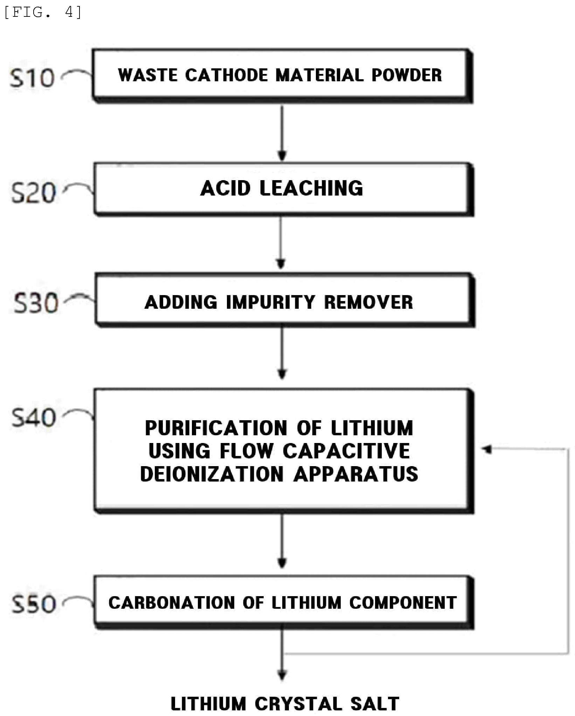

In addition, referring to FIG. 4, first, cathode material powder is prepared by crushing and pulverizing a lithium-ion battery cathode (step S10).

The cathode active material in the cathode material powder may be an NCM-based lithium composite transition metal oxide or a lithium iron phosphate compound.

Step S10 is the same as step S10 of FIG. 2 described above, so a description thereof is omitted here.

Next, a leachate is obtained from the obtained cathode material powder (step S20).

Step S20 is the same as step S20 of FIG. 3 described above, so a description thereof is omitted here.

Next, impurities are removed from the obtained leachate by adding lithium hydroxide (LiOH) or a basic compound as an impurity remover (step S30).

Step S30 has the advantage that high-purity lithium is recovered because polyvalent cations such as Fe, Al, Ni, Co, or Mn may be easily removed by precipitation by increasing the pH of the leachate by adding, for example, lithium hydroxide (LiOH) or a basic compound to the obtained leachate.

The basic compound, for example, may be a metal hydroxide, a metal carbonate, or a mixture thereof, and as a specific example, may be NaOH. In this case, there is an advantage that high-purity lithium is recovered because polyvalent cations such as Fe, Al, Ni, Co, or Mn may be easily removed by precipitation by increasing the pH of the leachate.

The metal hydroxide may preferably be sodium hydroxide, potassium hydroxide, or a mixture thereof. In this case, there is an advantage that high-purity lithium is recovered because polyvalent cations such as Fe, Al, Ni, Co, or Mn may be easily removed by precipitation by increasing the pH of the leachate.

The metal carbonate may preferably be sodium carbonate, potassium carbonate, or a mixture thereof. In this case, there is an advantage that high-purity lithium is recovered because polyvalent cations such as Fe, Al, Ni, Co, or Mn may be easily removed by precipitation by increasing the pH of the leachate.

The lithium hydroxide (LiOH), for example, may be added in an amount of 0.05 mol to 0.3 mol, as a specific example, 0.17 mol, per 1 mol of the cathode active material in the leachate. In this case, there is an advantage in that the pH of the leachate is increased, so that polyvalent cations such as Fe, Al, Ni, Co, or Mn are precipitated and easily removed.

The basic compound, for example, may be added in an amount of 0.05 mol to 0.3 mol, as a specific example, 0.17 mol, per 1 mol of the cathode active material in the leachate. In this case, there is an advantage in that the pH of the leachate is increased, so that polyvalent cations such as Fe, Al, Ni, Co, or Mn are precipitated and easily removed.

The pH after adding lithium hydroxide (LiOH) or a basic compound to the leachate, for example, may be pH 3 or higher, and as a specific example, may be pH 4.3 or higher. Within this range, there is an advantage in that polyvalent cations such as Fe, Al, Ni, Co, or Mn, which are impurities, are precipitated and easily removed.

Next, the leachate from which impurities have been removed is passed through a flow capacitive deionization apparatus to purify the lithium component (step S40).

Step S40 is the same as step S40 of FIG. 2 described above, so a description thereof is omitted here.

The lithium component purified through the flow capacitive deionization apparatus has a high purity and includes an extremely small amount of impurities.

Next, the purified lithium component is obtained as a lithium crystal salt (step S50).

Step S50 is the same as step S50 of FIG. 2 described above, so a description thereof is omitted here.

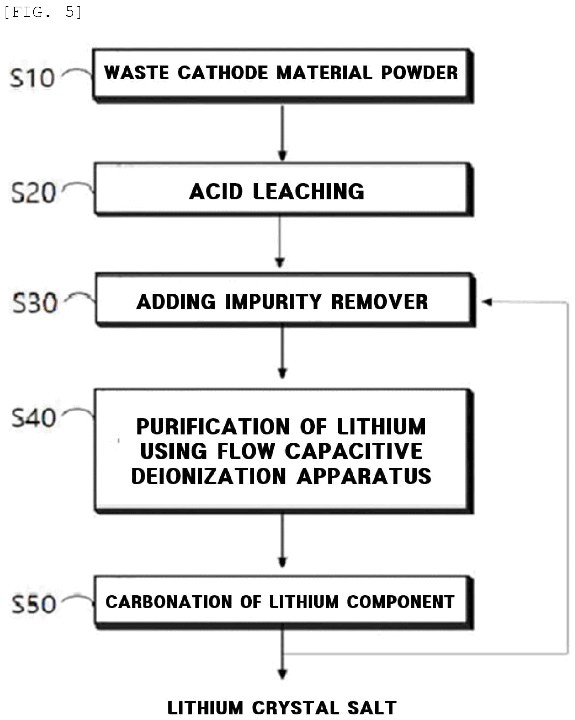

In addition, referring to FIG. 5, first, cathode material powder is prepared by crushing and pulverizing a lithium-ion battery cathode (step S10).

The cathode active material in the cathode material powder may preferably be an NCM-based lithium composite transition metal oxide or a lithium iron phosphate compound.

Step S10 is the same as step S10 of FIG. 2 described above, so a description thereof is omitted here.

Next, a leachate is obtained from the obtained cathode material powder (step S20).

Step S20 is the same as step S20 of FIG. 3 described above, so a description thereof is omitted here.

Next, impurities are removed from the obtained leachate by adding a filtrate remaining after obtaining the purified lithium component as a lithium crystal salt, as an impurity remover (step S30).

In step S30, the filtrate is a filtrate remaining after the purified lithium component obtained through the flow capacitive deionization apparatus is precipitated and separated as a lithium crystal salt, and the filtrate includes a lithium component.

The filtrate may be added in an amount such that the lithium in the filtrate is, for example, 0.2 to 0.8 mol, as a specific example, 0.5 mol, per 1 mol of lithium included in the purified lithium component. In this case, there is an advantage that high-purity lithium is recovered because the pH of the leachate is increased, allowing polyvalent cations such as Fe, Al, Ni, Co, or Mn to be precipitated and easily removed.

The pH after adding the filtrate to the obtained leachate, for example, may be pH 3 or higher, as a specific example, pH 4.3 or higher. Within this range, there is an advantage in that polyvalent cations such as Fe, Al, Ni, Co, or Mn are precipitated and easily removed.

Next, the leachate from which the impurities have been removed is introduced into a flow capacitive deionization apparatus to purify the lithium component (step S40).

Step S40 is the same as step S40 of FIG. 2 described above, so a description thereof is omitted here.

The purified lithium component has a high purity and includes an extremely small amount of impurities.

Next, the purified lithium component is obtained as a lithium crystal salt (step S50).

Step S50 is the same as step S50 of FIG. 2 described above, so a description thereof is omitted here.

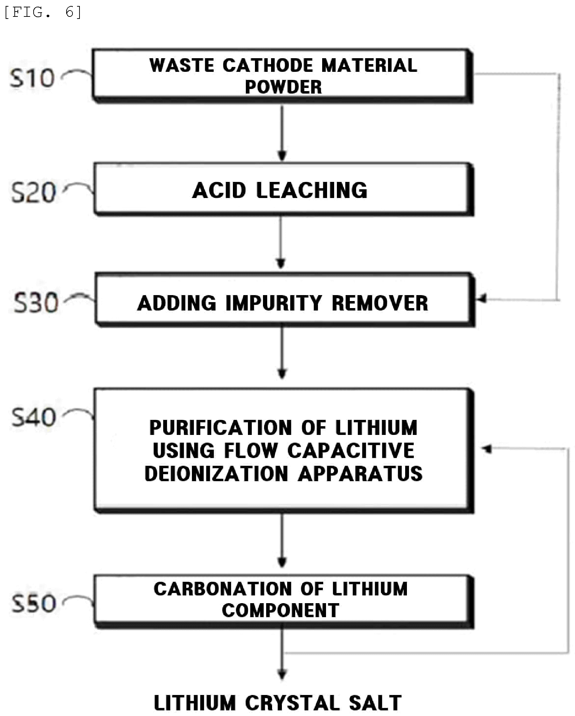

In addition, referring to FIG. 6, first, cathode material powder is prepared by crushing and pulverizing a lithium-ion battery cathode (step S10).

The cathode active material in the cathode material powder may preferably be an NCM-based lithium composite transition metal oxide or a lithium iron phosphate compound.

Step S10 is the same as step S10 of FIG. 2 described above, so a description thereof is omitted here.

A leachate is obtained from a portion of the cathode material powder obtained by crushing and pulverizing, and the remainder of the cathode material powder may be used as an impurity remover.

Next, a leachate is obtained from the obtained cathode material powder (step S20).

Step S20 is the same as step S20 of FIG. 3 described above, so a description thereof is omitted here.

Next, impurities are removed from the obtained leachate by adding the cathode material powder as an impurity remover (step S30).

In step S30, the cathode material powder is powder which was obtained by crushing and pulverizing a lithium-ion battery cathode in step S10, and the cathode material powder includes a large amount of lithium.

The cathode material powder, for example, may be added in an amount such that the lithium in the powder is 0.1 to 0.7 mol, as a specific example, 0.21 mol, per 1 mol of lithium included in the lithium leachate. In this case, there is an advantage in that high-purity lithium is recovered because polyvalent cations such as Fe, Al, Ni, Co, or Mn, which are impurities, may be easily removed by precipitation by increasing the pH of the leachate.

After adding the filtrate to the obtained leachate, the pH, for example, may be pH 3 or higher, as a specific example, 4.3 or higher. Within this range, there is an advantage in that polyvalent cations such as Fe, Al, Ni, Co, or Mn are precipitated and easily removed.

Next, the leachate is introduced into a flow capacitive deionization apparatus to purify the lithium component (step S40).

Step S40 is the same as step S40 of FIG. 2 described above, so a description thereof is omitted here.

The lithium component purified through the flow capacitive deionization apparatus has a high purity and includes an extremely small amount of impurities.

Next, the purified lithium component is obtained as a lithium crystal salt (step S50).

Step S50 is the same as step S50 of FIG. 2 described above, so a description thereof is omitted here.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Example I: Purification of a lithium component using a flow capacitive deionization apparatus]

* Flow capacitive deionization apparatus: A flow capacitive deionization apparatus as shown in FIG. 7 below was used. Specifically, the flow capacitive deionization apparatus includes the lithium leachate circulation tank 11; the anion adsorber including the negative membrane flow electrode circulation tank 12, the current collector 100, and the anion exchange membrane 200; the cation adsorber including the cation exchange membrane 300, the current collector 100, and the positive membrane flow electrode circulation tank 13; the cation desorber including the current collector 100 and the cation exchange membrane 300; and the cation collector including the deionized water circulation tank 15, the anion exchange membrane 200, the current collector 100, and the negative membrane flow electrode circulation tank 14. The cation exchange membrane 300 and the anion exchange membrane 200 were pore-filled ion exchange membranes from TAK company, in which an electrolyte is filled in a polyolefin-based support and the thickness is 60 $\mu$m. The current collector 100 was graphite, the active material in the flow electrode was activated carbon, the conductive additive was carbon black, and the solvent was water. Electricity was applied to the current collector of the flow capacitive deionization apparatus under a constant current condition of 1.5 A using a power supply apparatus (Potentiostat), and the positive membrane flow electrode, the negative membrane flow electrode, the lithium leachate, and the deionized water were operated at a speed of 40 mL/min with a flow electrode concentration of 13 % by weight.

* Method of purifying a lithium component using a flow capacitive deionization apparatus: The method was performed by including a step of adsorbing lithium cations onto a positive membrane flow electrode by passing a leachate, in which a lithium component is dissolved, between an anion adsorber including a negative membrane flow electrode and a cation adsorber including the positive membrane flow electrode; a step of desorbing the lithium cations from the positive membrane flow electrode by passing the positive membrane flow electrode, on which the lithium cations are adsorbed, between a current collector and a cation exchange membrane; and a step of collecting the desorbed lithium cations with deionized water.

* Li, Ni, Co, Mn, Fe, P, and Al contents (ppm): Measured through ICP analysis. Specifically, a 0.2 g aliquot of a solution containing Li, Ni, Co, Mn, Fe, P, or Al was placed into a conical tube, and the precise weight thereof was measured. Then, 0.1 ml of nitric acid at a concentration of 70 % by weight was added thereto, and then 500 $\mu$l of a 1000 mg/kg internal standard (Sc) were added thereto, followed by dilution with ultrapure water to a total volume of 50 ml. The contents of Li, Ni, Co, Mn, Fe, P, and Al were then measured via ICP analysis.

* Purity of lithium (wt%): A 0.1 g sample was taken, placed in a conical tube, and the exact weight thereof was measured. Then, 1.0 ml of 70 % by weight nitric acid was added to dissolve the sample. After the sample decomposed, 0.1 mL of internal STD (Sc, 1000 ppm) was added, and the mixture was diluted with ultrapure water to a volume of 10 ml to measure the contents of Li, Ni, Co, Mn, Fe, P, and Al through ICP-OES analysis. The purity of lithium was calculated from the measured contents using Equation 1 below.

[Equation 1] Purity of lithium (wt%) = 100 wt% - Total sum of components excluding lithium (wt%)     [Equation 1]

Example 1

A powder-form cathode material was obtained by crushing and pulverizing a cathode scrap (current collector: aluminum foil, cathode active material: NCMA-based lithium composite transition metal oxide) that was discarded after stamping a cathode plate. The crushing was performed using a shredder and the pulverizing was performed using a solid mixer, and then the material was sieved using a 325 mesh sieve to obtain a cathode material powder.

A heat-treated product was obtained by adding 37 g of a graphite anode material as a carbon-based reducing agent to 300 g of the obtained cathode material powder and performing heat treatment at 630 °C for 5 hours in an $N_2$ atmosphere. Here, the rate of temperature increase to reach the heat treatment temperature was 3 °C/min, and $N_2$ was supplied at 10 L/min. At this time, 1 mol of the carbon-based reducing agent was added per 1 mol of a cathode active material in the cathode material powder. Here, the number of moles of the cathode active material in the cathode material powder may be obtained by assuming the mass of the cathode material powder is the mass of the cathode active material.

A heat-treated cathode material powder was obtained by crushing and pulverizing the heat-treated product.

A lithium-dissolved leachate and a leaching residue were obtained by adding the heat-treated cathode material powder to distilled water at room temperature and stirring for 60 minutes at a stirring speed of 500 rpm. At this time, the solid-to-liquid ratio of the heat-treated cathode material powder and distilled water was 1g/30mL.

The leachate and the leaching residue were separated through reduced pressure filtration to obtain the leachate, and the components of the obtained leachate were measured by ICP analysis and are shown in Table 1 below.

The leachate was passed through a flow capacitive deionization apparatus to purify a lithium component and obtain a lithium concentrate, and the components of the obtained lithium concentrate were measured by ICP analysis and are shown in Table 1 below.

$CO_2$ was added to the obtained lithium concentrate to carbonate the lithium component in the concentrate, which was then heated at 80 °C for 60 minutes to be precipitated as $Li_2CO_3$.

The precipitated $Li_2CO_3$ was separated by reduced pressure filtration, and the obtained $Li_2CO_3$ was washed with water at 80 °C and then dried.

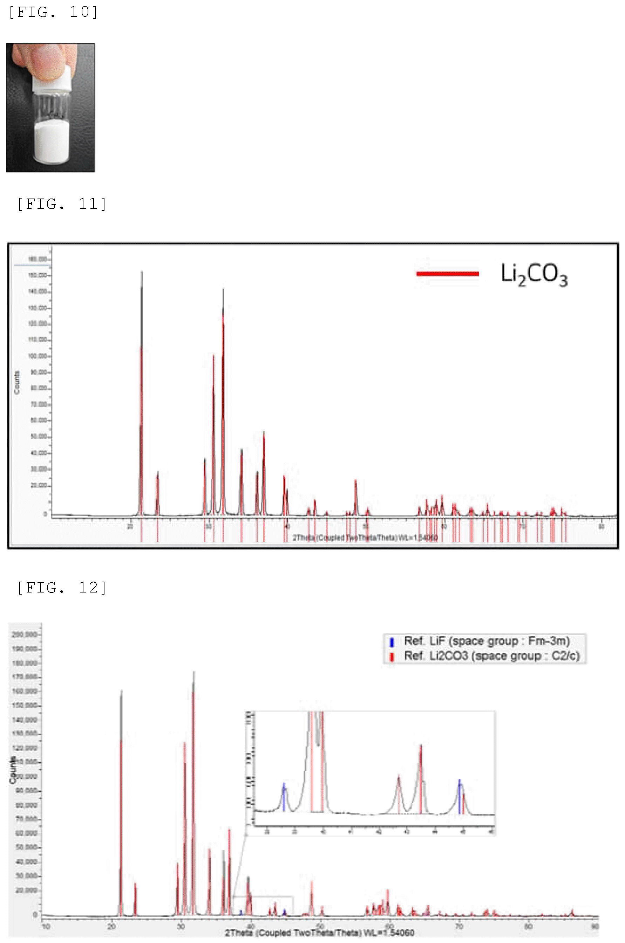

The content of each component in the $Li_2CO_3$ powder obtained after drying was measured by ICP analysis and is shown in Table 2 below, and the results of XRD analysis are shown in FIG. 11 below. For reference, the Li content, which is the main component in lithium carbonate, was not measured because the high content thereof reduces the reliability of the quantitative value.

As a result of measuring the purity of lithium from the content of each component measured by ICP analysis, the purity of lithium was 99 % by weight or more.

[Table 1]

|  | Li | Ni | Co | Mn | Fe | Al | Cu | etc* | F |
|---|---|---|---|---|---|---|---|---|---|
| Lithium leachate | 2450 | N.D. | N.D. | N.D. | N.D. | N.D. | N.D. | 26 | 230 |
| Lithium concentrate | 4720 | N.D. | N.D. | N.D. | N.D. | N.D. | N.D. | 420 | <20 |
| *etc: 13 types of components, such as Na, K, Ca, S, and P | | | | | | | | | [ppm] |
| ppm means mg/kg. | | | | | | | | | |

As shown in Table 1, it was confirmed that during the purification process of the lithium component using the flow capacitive deionization apparatus, the lithium component greatly increased, while the Ni, Co, Mn, Fe, Al, and Cu components were not detected, and the F component also greatly decreased. Here, the reason for the increased content of 13 types of other (etc) components, such as Na, K, Ca, S, and P, is that elements originating from the activated carbon were included during the purification process of the lithium component using the flow capacitive deionization apparatus. The 13 types of other components (etc) may be easily removed through washing in the subsequent lithium crystallization step.

[Table 2]

| | Ni | Co | Mn | Fe | Al | Cu | etc* | F |
|---|---|---|---|---|---|---|---|---|
| Final obtained lithium carbonate | ND. | ND. | N.D. | N.D. | N.D. | N.D. | 443 | <30 |
| *etc: 13 types of components, such as Na, K, Ca, S, and P | | | | | | | | [ppm] |
| ppm means mg/kg. | | | | | | | | |

As shown in Table 2, from the fact that in the finally obtained lithium carbonate powder, the components Ni, Co, Mn, Fe, Al, and Cu were not detected, while small amounts of 13 other components such as Na, K, Ca, S, and P, and the F component were detected, it was confirmed that high-purity lithium was recovered.

In addition, as shown in FIG. 11 below, the XRD measurement result confirmed that the crystal phase was consistent with that of lithium carbonate.

Example 2

A powder-form cathode material was obtained by crushing and pulverizing a cathode scrap (current collector: aluminum foil, cathode active material: LFP-based lithium iron phosphate compound) that was discarded after stamping a cathode plate.

500 g of the cathode material powder was added to a mixed solution of 4300 mL of an aqueous hydrochloric acid solution with a concentration of 0.8 mol/L and 700 ml of an aqueous hydrogen peroxide solution with a concentration of 30 to 32 % by weight, and dissolved under room temperature and stirring to obtain a lithium-dissolved leachate and a leaching residue. At this time, per 1 mol of a cathode active material in the cathode material powder, the hydrochloric acid was 1.1 mol, and the hydrogen peroxide was 2.1 mol.

The obtained leachate and leaching residue were separated by reduced pressure filtration to obtain the leachate, and the contents of Li, Fe, P, and Al therein were measured through ICP analysis and are shown in Table 3 below.

The leachate was filtered with a nanofiltration membrane to remove polyvalent ions such as Fe and Al in the leachate, and the contents of Li, Fe, P, and Al therein were measured through ICP analysis and are shown in Table 3 below.

The leachate from which the polyvalent ions had been removed was purified through a flow capacitive deionization apparatus to obtain a lithium concentrate.

The obtained lithium concentrate was carbonated by adding $CO_2$, and then heated at 80 °C for 60 minutes to be precipitated as $Li_2CO_3$.

The precipitated $Li_2CO_3$ was separated by reduced pressure filtration, and the obtained $Li_2CO_3$ was washed with water at 80 °C and then dried.

As a result of calculating the purity of the $Li_2CO_3$ powder obtained after drying through ICP analysis, the purity of lithium was 99 % by weight or more.

[Table 3]

| | Li | Fe | P | Al |
|---|---|---|---|---|
| Lithium leachate | 3739 | 210 | 246 | 250 |
| After nanofiltration process | 3412 | N.D. | 104 | N.D. |
| | | | | [ppm] |
| ppm means mg/kg. | | | | |

As shown in Table 3, it was confirmed that through the process of filtering the lithium leachate with a nanofiltration membrane, the Fe and Al components were not detected, and the P component was greatly reduced.

Example 3

A powder-form cathode material was obtained by crushing and pulverizing a cathode scrap (current collector: aluminum foil, cathode active material: LFP-based lithium iron phosphate compound) that was discarded after stamping a cathode plate.

500 g of the cathode material powder was added to a mixed solution of 4300 ml of an aqueous hydrochloric acid solution with a concentration of 0.8 mol/L and 700 ml of an aqueous hydrogen peroxide solution with a concentration of 30 to 32 % by weight, and dissolved under room temperature and stirring to obtain a lithium-dissolved leachate and a leaching residue. At this time, per 1 mol of the cathode active material in the cathode material powder, the hydrochloric acid was 1.1 mol, and the hydrogen peroxide was 2.1 mol.

The obtained leachate and leaching residue were separated by reduced pressure filtration to obtain the leachate.

LiOH was added to the leachate to adjust the pH to pH 4.3 or higher, thereby causing polyvalent ions such as Fe and Al to precipitate, and the polyvalent ions were separated by reduced pressure filtration to obtain a leachate from which the polyvalent ions had been removed. At this time, LiOH was added in an amount of 0.17 mol per 1 mol of Li in the leachate.

The leachate from which the polyvalent ions had been removed was purified through a flow capacitive deionization apparatus to obtain a lithium concentrate.

The obtained lithium concentrate was carbonated by adding $CO_2$ to carbonate the lithium component in the concentrate, and then heated at 80°C for 60 minutes to be precipitated as $Li_2CO_3$.

The precipitated $Li_2CO_3$ was separated by reduced pressure filtration, and the obtained $Li_2CO_3$ was washed with water at 80 °C and then dried.

As a result of measuring the purity of the $Li_2CO_3$ powder obtained after drying through ICP analysis, the purity of lithium was 99 % by weight or more.

Comparative Example 1

Comparative Example 1 was performed in the same manner as in Example 1, except that the leachate was not introduced into a flow capacitive deionization apparatus, and instead, a precipitate was obtained through vacuum evaporation and dried to obtain $Li_2CO_3$ powder. The obtained $Li_2CO_3$ powder was analyzed by XRD, and the results are shown in FIG. 12 below.

As shown in FIG. 12 below, in Comparative Example 1, a LiF peak was observed in addition to $Li_2CO_3$. The LiF content measured through a quantitative analysis based on peak intensity was 2 % by weight, and based on this result, the purity of lithium was calculated to be 97.6 % by weight.

[Description of Symbols]

10: ADSORBER
11: LI LEACHATE CIRCULATION TANK
12: NEGATIVE MEMBRANE FLOW ELECTRODE CIRCULATION TANK
13: POSITIVE MEMBRANE FLOW ELECTRODE CIRCULATION TANK
14: NEGATIVE MEMBRANE FLOW ELECTRODE CIRCULATION TANK
15: DEIONIZED WATER CIRCULATION TANK
20: DESORBER
100: CURRENT COLLECTOR
200: ANION EXCHANGE MEMBRANE (AEM)
300: CATION EXCHANGE MEMBRANE (CEM)
400: SPACER
500: PUMP

**Claims**

1. A method of recovering lithium, comprising obtaining a leachate, in which a lithium component is dissolved, from cathode material powder; and purifying a lithium component by introducing the leachate into a flow capacitive deionization apparatus.

2. A method of recovering lithium, comprising:

adsorbing lithium cations onto a positive membrane flow electrode by passing a leachate, in which a lithium component is dissolved, between an anion adsorber comprising a negative membrane flow electrode and a cation adsorber comprising the positive membrane flow electrode;
desorbing the lithium cations from the positive membrane flow electrode by passing the positive membrane flow electrode, on which the lithium cations are adsorbed, between a current collector and a cation exchange membrane; and

collecting the desorbed lithium cations with deionized water.

3. A method of recovering lithium, comprising:

(a) obtaining cathode material powder by crushing and/or pulverizing a lithium-ion battery cathode;
(b) obtaining a leachate, in which a lithium component is dissolved, by adding a leaching solvent to the cathode material powder;
(c) purifying the lithium component by passing the leachate through a flow capacitive deionization apparatus; and
(d) obtaining the purified lithium component as a lithium crystal salt.

4. The method according to claim 3, wherein a heat-treated product is obtained by heat-treating the cathode material powder obtained in step (a) with a carbon-containing reducing agent, and the heat-treated product is crushed and/or pulverized and then is introduced into step (b).

5. The method according to claim 4, wherein the heat treatment is performed at a temperature of 550 to 750 °C under a reducing gas or an inert gas.

6. The method according to claim 4, wherein the carbon-containing reducing agent is used in an amount of 0.3 to 3 mol per 1 mol of a cathode active material in the cathode material powder.

7. The method according to claim 4, wherein the carbon-containing reducing agent is a carbon-containing organic substance, a carbon-containing inorganic substance, a carbon-based anode material, or a mixture of two or more thereof.

8. The method according to claim 3, wherein, in step (b), the cathode material powder obtained in step (a) is leached with water to obtain a lithium-dissolved leachate and a leaching residue, and the leachate is collected by separating the leachate and the leaching residue.

9. The method according to claim 3, wherein, in step (b), the cathode material powder obtained in step (a) is added to a mixture of an acidic solution and an oxidizing agent to obtain a lithium-dissolved leachate and a leaching residue, and the leachate is collected by separating the leachate and the leaching residue.

10. The method according to claim 9, wherein, in step (b), the acidic solution contains an acid at a concentration of 0.1 to 1.5 mol/L.

11. The method according to claim 9, wherein, in step (b), the acidic solution is added in an acid amount of 0.1 to 1.5 mol per 1 mol of a cathode active material in the cathode material powder.

12. The method according to claim 9, wherein, in step (b), the oxidizing agent is added in an amount of 0.5 to 2.3 mol per 1 mol of a cathode active material in the cathode material powder.

13. The method according to claim 9, wherein, in step (b), the oxidizing agent comprises one or more selected from the group consisting of hydrogen peroxide, sodium persulfate, potassium persulfate, ammonium persulfate, oxygen, and air.

14. The method according to claim 3, wherein the leachate obtained in step (b) is subjected to impurity removal step (b'), and then is introduced to step (c).

15. The method according to claim 14, wherein impurity removal step (b') is a step of filtering the leachate with a nanofiltration membrane.

16. The method according to claim 14, wherein, in impurity removal step (b'), one or more impurity removers selected from the group consisting of lithium hydroxide (LiOH); a basic compound; cathode material powder; and a filtrate remaining after obtaining the purified lithium component as a lithium crystal salt are added to the leachate.

17. The method according to claim 3, wherein, in step (c), when purifying the lithium component, purification and filtration of the lithium component are performed simultaneously.

18. The method according to claim 3, wherein, in step (c), in the leachate introduced into the flow capacitive deionization apparatus, a total content of metal components, excluding lithium, is 1% by weight or less.

19. The method according to claim 3, wherein, in step (c), the flow capacitive deionization apparatus comprises a lithium leachate circulation tank; an anion adsorber comprising a negative membrane flow electrode circulation tank, a current collector, and an anion exchange membrane; a cation adsorber comprising a cation exchange membrane, a current collector, and a positive membrane flow electrode circulation tank; a cation desorber comprising a current collector and a cation exchange membrane; and a cation collector comprising a deionized water circulation tank, an anion exchange membrane, a current collector, and a negative membrane flow electrode circulation tank.

20. The method according to claim 19, wherein, in step (c), the flow capacitive deionization apparatus comprises adsorbing lithium cations onto a positive membrane flow electrode by passing a leachate, in which a lithium component is dissolved, between the anion adsorber comprising a negative membrane flow electrode and the cation adsorber comprising the positive membrane flow electrode;

   desorbing the lithium cations from the positive membrane flow electrode by passing the positive membrane flow electrode, on which the lithium cations are adsorbed, between the current collector and the cation exchange membrane; and
   collecting the desorbed lithium cations with deionized water.

21. The method according to claim 20, wherein the flow capacitive deionization apparatus comprises adsorbing anions onto the negative membrane flow electrode by passing a leachate, in which a lithium component is dissolved, between the cation adsorber comprising the positive membrane flow electrode and the anion adsorber comprising the negative membrane flow electrode; desorbing the anions from the negative membrane flow electrode by passing the negative membrane flow electrode, on which the anions are adsorbed, between the current collector and the anion exchange membrane; and collecting the desorbed anions with deionized water.

22. The method according to claim 19, wherein the positive membrane flow electrode and the negative membrane flow electrode each comprise an active material, a conductive additive, and a solvent.

23. The method according to claim 22, wherein the active material comprises one or more selected from the group consisting of activated carbon, carbon beads, mesoporous carbon, carbon nanotubes, graphene, carbon black, activated carbon fiber, and $MnO_2$.

24. The method according to claim 22, wherein the conductive additive comprises one or more selected from the group consisting of carbon black, carbon nanotubes, graphene, and reduced graphene oxide (rGO), and is not identical to the active material.

25. The method according to claim 22, wherein the solvent is sodium chloride (NaCl) solution, deionized water, or distilled water.

26. The method according to claim 3, wherein the lithium crystal salt obtained in step (d) comprises one or more selected from the group consisting of LiOH, $Li_2CO_3$, LiCl, $Li_2SO_4$, and $LiNO_3$.

27. The method according to claim 3, wherein, in step (d), the purified lithium component is carbonated to obtain lithium carbonate.

28. The method according to claim 3, wherein, in the lithium crystal salt obtained in step (d), purity of lithium is 99 % by weight or more.

29. The method according to claim 3, wherein, in step (d), after the purified lithium component is converted to a lithium crystal salt, the remaining filtrate is introduced into the flow capacitive deionization apparatus to be reused.

30. The method according to claim 3, wherein the cathode material comprises one or more selected from the group consisting of lithium cobalt oxide; lithium manganese oxide; a lithium iron phosphate compound; lithium nickel cobalt aluminum oxide; lithium nickel oxide; a nickelmanganese-based lithium composite metal oxide in which a portion of nickel (Ni) in the lithium nickel oxide is substituted with manganese (Mn); and an NCM-based lithium composite transition metal oxide in which a portion of nickel (Ni) in the lithium nickel oxide is substituted with manganese (Mn) and cobalt (Co).

31. The method according to claim 3, wherein the lithium-ion battery cathode is a discarded lithium-ion battery cathode.

32. An apparatus for recovering lithium, comprising:

> a lithium leachate circulation tank;
> an anion adsorber comprising a negative membrane flow electrode circulation tank, a current collector, and an anion exchange membrane;
> a cation adsorber comprising a cation exchange membrane, a current collector, and a positive membrane flow electrode circulation tank;
> a cation desorber comprising a current collector and a cation exchange membrane; and
> a cation collector comprising a deionized water circulation tank, an anion exchange membrane, a current collector, and a negative membrane flow electrode circulation tank,
> wherein lithium cations contained in the lithium leachate pass through the cation exchange membrane of the adsorber and move to the positive membrane flow electrode circulation tank, and then pass through the cation exchange membrane of the desorber to be collected in the deionized water circulation tank of the collector.

[FIG. 1]

S10 — WASTE CATHODE MATERIAL POWDER

S20 — LEACHATE IN WHICH LITHIUM COMPONENT IS DISSOLVED

S30 — PURIFICATION OF LITHIUM USING FLOW CAPACITIVE DEIONIZATION APPARATUS

S40 — CARBONATION OF LITHIUM COMPONENT

LITHIUM CRYSTAL SALT

[FIG. 2]

S10 — **WASTE CATHODE MATERIAL POWDER**

↓

S20 — **HEAT TREATMENT WITH CARBON-CONTAINING REDUCING AGENT**

↓

S30 — **WATER LEACHING**

↓

S40 — **PURIFICATION OF LITHIUM USING FLOW CAPACITIVE DEIONIZATION APPARATUS**

↓

S50 — **CARBONATION OF LITHIUM COMPONENT**

↓

**LITHIUM CRYSTAL SALT**

[FIG. 3]

```
S10 ─┐  ┌──────────────────────────────────────┐
     └─▶│     WASTE CATHODE MATERIAL POWDER     │
        └──────────────────────────────────────┘
                          │
                          ▼
S20 ─┐  ┌──────────────────────────────────────┐
     └─▶│             ACID LEACHING             │
        └──────────────────────────────────────┘
                          │
                          ▼
S30 ─┐  ┌──────────────────────────────────────┐
     └─▶│     FILTRATION WITH NANOFILTRATION    │
        │               MEMBRANE                │
        └──────────────────────────────────────┘
                          │
                          ▼
S40 ─┐  ┌──────────────────────────────────────┐
     └─▶│       PURIFICATION OF LITHIUM         │◀─┐
        │       USING FLOW CAPACITIVE           │  │
        │      DEIONIZATION APPARATUS           │  │
        └──────────────────────────────────────┘  │
                          │                        │
                          ▼                        │
S50 ─┐  ┌──────────────────────────────────────┐  │
     └─▶│     CARBONATION OF LITHIUM COMPONENT  │  │
        └──────────────────────────────────────┘  │
                          │                        │
                          ├────────────────────────┘
                          ▼
                LITHIUM CRYSTAL SALT
```

[FIG. 4]

```
S10 ──⌒  ┌─────────────────────────────────────────┐
         │      WASTE CATHODE MATERIAL POWDER       │
         └─────────────────────────────────────────┘
                            │
                            ▼
S20 ──⌒  ┌─────────────────────────────────────────┐
         │              ACID LEACHING               │
         └─────────────────────────────────────────┘
                            │
                            ▼
S30 ──⌒  ┌─────────────────────────────────────────┐
         │          ADDING IMPURITY REMOVER         │
         └─────────────────────────────────────────┘
                            │
                            ▼
S40 ──⌒  ┌─────────────────────────────────────────┐
         │        PURIFICATION OF LITHIUM           │◄────┐
         │        USING FLOW CAPACITIVE             │     │
         │        DEIONIZATION APPARATUS            │     │
         └─────────────────────────────────────────┘     │
                            │                             │
                            ▼                             │
S50 ──⌒  ┌─────────────────────────────────────────┐     │
         │      CARBONATION OF LITHIUM COMPONENT    │     │
         └─────────────────────────────────────────┘     │
                            │                             │
                            ├─────────────────────────────┘
                            ▼
                  LITHIUM CRYSTAL SALT
```

[FIG. 5]

```
S10 ─╮  ┌─────────────────────────────────────┐
     └──│     WASTE CATHODE MATERIAL POWDER    │
        └─────────────────────────────────────┘
                         │
                         ▼
S20 ─╮  ┌─────────────────────────────────────┐
     └──│             ACID LEACHING            │
        └─────────────────────────────────────┘
                         │
                         ▼
S30 ─╮  ┌─────────────────────────────────────┐◄──┐
     └──│        ADDING IMPURITY REMOVER       │   │
        └─────────────────────────────────────┘   │
                         │                         │
                         ▼                         │
S40 ─╮  ┌─────────────────────────────────────┐   │
     └──│         PURIFICATION OF LITHIUM      │   │
        │        USING FLOW CAPACITIVE         │   │
        │        DEIONIZATION APPARATUS        │   │
        └─────────────────────────────────────┘   │
                         │                         │
                         ▼                         │
S50 ─╮  ┌─────────────────────────────────────┐   │
     └──│     CARBONATION OF LITHIUM COMPONENT │   │
        └─────────────────────────────────────┘   │
                         │─────────────────────────┘
                         ▼

              LITHIUM CRYSTAL SALT
```

[FIG. 6]

[FIG. 7]

[FIG. 8]

[FIG. 9]

[FIG. 10]

[FIG. 11]

[FIG. 12]

TRANSLATION

## INTERNATIONAL SEARCH REPORT

| International application No. |
| --- |
| **PCT/KR2025/015171** |

| A. | CLASSIFICATION OF SUBJECT MATTER |
| --- | --- |

**C22B 26/12**(2006.01)i; **C22B 3/42**(2006.01)i; **C22B 1/00**(2006.01)i; **C22B 5/12**(2006.01)i; **C22B 3/06**(2006.01)i; **C22B 3/22**(2006.01)i; **H01M 10/54**(2006.01)i; **B01D 61/44**(2006.01)i

According to International Patent Classification (IPC) or to both national classification and IPC

| B. | FIELDS SEARCHED |
| --- | --- |

Minimum documentation searched (classification system followed by classification symbols)

C22B 26/12(2006.01); C02F 1/461(2006.01); C02F 1/469(2006.01); C22B 1/00(2006.01); C22B 3/08(2006.01); C22B 7/00(2006.01); H01M 10/052(2010.01); H01M 10/54(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬(lithium), 회수(recover), 침출(leaching), 흡착(adsorption), 탈착(desorption), 흐름 축전식 탈이온화 장치(flow capacitive deionization), 전극(electrode), 교환막(exchange membrane), 불순물(impurity), 열처리(heat treatment), 탄소(carbon)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2024-0006124 A (KOREA UNIVERSITY RESEARCH AND BUSINESS FOUNDATION) 15 January 2024 (2024-01-15) paragraphs [0005], [0008], [0012], [0032]-[0035], [0037]-[0039], [0041]-[0042], [0044]-[0046], [0050], [0052], [0055], [0057]-[0058], [0060]-[0063], claim 1 and figures 1-3 | 1-3,17-21,26-32 |
| Y | | 4-16,22-25 |
| Y | KR 10-2003-0070468 A (KOREA INSTITUTE OF GEOSCIENCE AND MINERAL RESOURCES) 30 August 2003 (2003-08-30) paragraph [0021] | 4-7 |
| Y | JP 2024-514966 A (GEM CO., LTD. et al.) 03 April 2024 (2024-04-03) claim 1 | 8,15 |
| Y | KR 10-2015-0075200 A (POSCO et al.) 03 July 2015 (2015-07-03) paragraphs [0028], [0030] and claims 1, 3-4 | 9-16 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 January 2026** | **09 January 2026** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/015171**

### C.    DOCUMENTS CONSIDERED TO BE RELEVANT

| Category* | Citation of document, with indication, where appropriate, of the relevant passages | Relevant to claim No. |
|---|---|---|
| Y | KR 10-2023-0086072 A (KOREA INSTITUTE OF MACHINERY & MATERIALS) 15 June 2023 (2023-06-15)<br>paragraph [0020] | 22-25 |

Form PCT/ISA/210 (second sheet) (July 2022)

**INTERNATIONAL SEARCH REPORT**
**Information on patent family members**

International application No.

**PCT/KR2025/015171**

| Patent document cited in search report | | | Publication date (day/month/year) | Patent family member(s) | | | Publication date (day/month/year) |
|---|---|---|---|---|---|---|---|
| KR | 10-2024-0006124 | A | 15 January 2024 | KR | 10-2794041 | B1 | 10 April 2025 |
| | | | | US | 2024-0014456 | A1 | 11 January 2024 |
| KR | 10-2003-0070468 | A | 30 August 2003 | KR | 10-0448272 | B1 | 10 September 2004 |
| JP | 2024-514966 | A | 03 April 2024 | CN | 113897488 | A | 07 January 2022 |
| | | | | EP | 4324949 | A1 | 21 February 2024 |
| | | | | EP | 4324949 | A4 | 26 June 2024 |
| | | | | EP | 4324949 | B1 | 11 June 2025 |
| | | | | EP | 4324949 | C0 | 11 June 2025 |
| | | | | ES | 3036200 | T3 | 16 September 2025 |
| | | | | HU | E072628 | T2 | 28 November 2025 |
| | | | | JP | 7546789 | B2 | 06 September 2024 |
| | | | | KR | 10-2023-0156432 | A | 14 November 2023 |
| | | | | KR | 10-2724564 | B1 | 31 October 2024 |
| | | | | PL | 4324949 | T3 | 20 October 2025 |
| | | | | US | 12113187 | B2 | 08 October 2024 |
| | | | | US | 2024-0063455 | A1 | 22 February 2024 |
| | | | | WO | 2023-029898 | A1 | 09 March 2023 |
| KR | 10-2015-0075200 | A | 03 July 2015 | KR | 10-1589738 | B1 | 29 January 2016 |
| KR | 10-2023-0086072 | A | 15 June 2023 | | None | | |

Form PCT/ISA/210 (patent family annex) (July 2022)

**EP 4 768 612 A1**

**Patent documents cited in the description**

- KR 1020240131492
- KR 1020250138761
- KR 20120031832 A